# EUROPÄISCHE PATENTSCHRIFT

(11) **EP 4 259 372 B1**
(45) Veröffentlichungstag und Bekanntmachung des Hinweises auf die Patenterteilung: **19.08.2026**
(21) Anmeldenummer: 21802670.6
(22) Anmeldetag: 29.10.2021
(51) Int. Cl.: B23K 26/0622, C03B 33/09, C03B 33/02, B23K 26/073, B23K 26/08, B23K 26/53, C03B 33/037, C03B 33/04, C03C 15/00, C03C 23/00

(54) **HOCHENERGIEGLASSCHNEIDEN**
HIGH ENERGY GLASS CUTTING
COUPAGE DE VERRE PAR ENERGIE FORTE

(30) Priorität: 08.12.2020 DE 102020132700
(43) Veröffentlichungstag der Anmeldung: 18.10.2023
(73) Patentinhaber: TRUMPF Laser- und Systemtechnik SE, 71254 Ditzingen (DE)
(72) Erfinder: KLEINER, Jonas, 71229 Leonberg (DE); FLAMM, Daniel, 71640 Ludwigsbug (DE); HESSE, Tim, 71254 Ditzingen (DE); KUMKAR, Malte, 99425 Weimar (DE); KAISER, Myriam, 71296 Heimsheim (DE)
(74) Vertreter: Trumpf Patentabteilung
(86) Internationale Anmeldenummer: PCT/EP2021/080197
(87) Internationale Veröffentlichungsnummer: WO 2022/122252

(56) Entgegenhaltungen:
- EP-B1- 3 311 947
- WO-A1-2020/230064
- US-A1- 2017 008 793
- US-A1- 2018 057 390

## Beschreibung

### Technisches Gebiet

Die vorliegende Erfindung betrifft ein Verfahren zum Trennen eines zumindest teilweise transparenten Materials.

### Stand der Technik

In den letzten Jahren hat die Entwicklung von Lasern mit sehr kurzen Pulslängen, insbesondere mit Pulslängen unter einer Nanosekunde, und hohen mittleren Leistungen, insbesondere im Kilowatt-Bereich, zu einer neuen Art der Materialbearbeitung geführt. Die kurze Pulslänge und hohe Pulsspitzenleistung beziehungsweise die hohe Pulsenergie von einigen 100 µJ können zu einer nicht-linearen Absorption der Pulsenergie im Material führen, so dass auch für die verwendete Laserlichtwellenlänge eigentlich transparente beziehungsweise im wesentlichen transparente Materialien bearbeitet werden können.

In der US10421683 wird ein Trennverfahren beschrieben welches auf dem Einbringen von Laserpulsen in das Material beruht. Problematisch gemäß Verfahren nach dem Stand der Technik ist, dass vor allem bei dickeren Materialien, insbesondere Gläsern oder Schichtsystemen, mit einer Materialdicke von mehr als 1mm, eine gute Trennbarkeit nur schwer oder nicht zu erzielen ist. Unter guter Trennbarkeit wird üblicherweise verstanden, dass ein Material zuverlässig entlang einer vorgegebenen Trennlinie getrennt werden kann.

Aus der US 2017/008793 A1, welche die Basis für den Oberbegriff des Anspruchs 1 darstellt, ist ein Verfahren zur Bearbeitung eines transparenten Werkstücks bekannt, bei dem ein gepulster Laserstrahl in eine sich parallel zur Strahlausbreitungsrichtung erstreckende Brennlinie fokussiert wird und bei dem der Laserstrahl mit der Brennlinie unter einem Anstellwinkel in das Werkstück eingebracht und relativ zu dem Werkstück bewegt wird.

Aus der EP 3 311 947 B1 ist ein weiteres Verfahren zur Bearbeitung eines transparenten Werkstücks mittels eines gepulsten Laserstrahls bekannt, wobei der Laserstrahl einen nichtachsensymmetrischen Strahlquerschnitt aufweist.

Aus der US 2018/057390 A1 ist ein Verfahren zur Laserbearbeitung eines Erdalkali-Boroaluminosilikat-Glaswerkstücks für einen TFT oder ein Display bekannt, bei dem ein gepulster Laserstrahl in eine sich parallel zur Strahlausbreitungsrichtung erstreckende Laserstrahlbrennlinie fokussiert wird, welche in das Glaswerkstück gerichtet ist, wobei die Laserstrahlbrennlinie eine induzierte Absorption in dem Material erzeugt und dadurch eine Fehlerlinie entlang der Laserstrahlbrennlinie in dem Glaswerkstück gebildet wird.

Aus der WO 2020/230064 A1 ist ein Verfahren zum Bearbeiten von transparenten Materialien durch Bilden einer Schnitt- oder Spaltfläche in einem Werkstückmaterial bekannt.

### Darstellung der Erfindung

Ausgehend von dem bekannten Stand der Technik ist es eine Aufgabe der vorliegenden Erfindung, ein verbessertes Verfahren zu, bereitzustellen.

Die Aufgabe wird durch ein Verfahren zum Trennen eines zumindest teilweise transparenten Materials mit den Merkmalen des Anspruchs 1 gelöst. Vorteilhafte Weiterbildungen ergeben sich aus den Unteransprüchen, der Beschreibung und den Figuren.

Das Material kann ein Metall oder ein Halbleiter oder ein Isolator oder eine Kombination davon sein. Insbesondere kann es auch ein Glas, eine Glaskeramik, ein Polymer oder ein Halbleiterwafer, beispielsweise ein Siliziumwafer, sein. Das Material kann auch ein Glassubstrat und/oder ein gestapeltes Substratsystem und/oder ein Siliziumwafer sein. Bevorzugt ist die Dicke L_{M} des Materials größer als 1mm.

Das Material ist hierbei teilweise transparent für die Wellenlänge des Lasers, wobei teilweise transparent bedeutet, dass typischer Weise 50% oder mehr des einfallenden Lichts dieser Wellenlänge durch das Material hindurch transmittiert werden.

Der Ultrakurzpulslaser stellt hierbei ultrakurze Laserpulse zur Verfügung. Ultrakurz kann hierbei bedeuten, dass die Pulslänge beispielsweise zwischen 500 Pikosekunden und 1 Femtosekunden liegt, insbesondere zwischen 100 Pikosekunden und 10 Femtosekunden liegt. Der Ultrakurzpulslaser kann auch Pulszüge (sogenannte Bursts) aus ultrakurzen Laserpulsen zur Verfügung stellen, wobei jeder Pulszug das Aussenden mehrerer Sub-Laserpulse umfasst. Der zeitliche Abstand der Sub-Laserpulse kann hierbei zwischen 10 Pikosekunden und 500 Nanosekunden insbesondere 10 Nanosekunden und 80 Nanosekunden groß sein. Als ultrakurzer Laserpuls wird auch ein zeitlich geformter Puls betrachtet, der eine nennenswerte Änderung der Amplitude innerhalb eines Bereichs zwischen 50 Femtosekunden und 5 Pikosekunden aufweist. Im folgenden Text wird wiederholt der Begriff Puls oder Laserpuls verwendet. In diesem Fall sind auch zeitlich geformte Laserpulse mit eingeschlossen, auch wenn dies nicht jeweils explizit ausgeführt wird. Die von dem Ultrakurzpulslaser ausgesendeten ultrakurzen Laserpulse bilden entsprechend einen Laserstrahl aus.

Der Laserstrahl wird so in das Material fokussiert, dass der Laserstrahl in Strahlausbreitungsrichtung eine elongierte Fokuszone aufweist. Das kann bedeuten, dass die Fokuszone des Laserstrahls in der Strahlausbreitungsrichtung größer ist, als die Ausdehnung des Laserstrahls senkrecht zur Strahlausbreitungsrichtung. Eine allgemeine Definition für die Ausdehnung der Fokuszone wird weiter unten gegeben.

Die elongierte Modifikationszone beschreibt hingegen den Bereich des Laserstrahls in dem die Intensität über der Bearbeitungsschwelle des Materials liegt, so dass innerhalb der Modifikationszone des Lasers eine Materialbearbeitung erfolgen kann. Die geometrische Form der Modifikationszone des Lasers und der Fokuszone sind hierbei durch die Skalierung mit der der Laserintensität mit einander verknüpft.

Die elongierte Modifikationszone durchdringt mindestens eine Oberfläche. Dies kann bedeuten, dass eine Oberfläche des Materials die elongierte Modifikationszone schneidet. Insbesondere ist dadurch die Intensität des Laserstrahls auf dieser Oberfläche größer als auf der Oberfläche, die von der elongierten Modifikationszone nicht durchdrungen wird. Insbesondere ist es dadurch möglich, dass der Laserstrahl die Pulsenergie in das Volumen des Materials abgibt.

Die elongierte Modifikationszone kann auch mehr als eine Oberfläche durchdringen. Insbesondere können dadurch von der elongierten Modifikationszone auch zwei gegenüberliegende Oberflächen durchdrungen werden, so dass zwischen den beiden Oberflächen eine quasi homogene Intensitätsverteilung durch den Laser vorliegt.

Der Laserpuls oder die Laserpulse werden vom Material zumindest teilweise absorbiert, sodass sich das Material lokal erhitzt beziehungsweise in einen temporären plasmaförmigen Zustand übergeht. Die Absorption kann hierbei auf linearer oder nicht-linearer Absorption beruhen. Die Größe des bearbeiteten Bereiches ist dabei durch die Strahlgeometrie, insbesondere durch die Modifikationszone des Laserstrahls und den Strahlquerschnitt, bestimmt. Insbesondere kann durch die in Strahlausbreitungsrichtung elongierte Modifikationszone eine Materialmodifikation erzeugt werden, welche beispielsweise über die gesamte Dicke des Materials reichen kann.

Eine solche Materialmodifikation über die gesamte Materialdicke hinweg kann beispielsweise direkt mit einem einzigen Puls oder einem einzigen Laserpulszug von Sub-Laserpulsen erzeugt werden. Durch die lokale Einwirkung des Lasers werden somit die Materialmodifikationen in das Material eingebracht.

Die Materialmodifikation kann hierbei allgemein eine Modifikation der Struktur, insbesondere der kristallinen Struktur und/oder der amorphen Struktur und/oder der mechanischen Struktur, des Materials sein. Beispielsweise kann eine eingebrachte Materialmodifikation eines amorphen Material darin bestehen, dass das Material durch eine lokale Erhitzung nur in diesem Bereich eine veränderte Netzwerkstruktur erhält. Beispielsweise können durch die Modifikation die Bindungswinkel- und Längen der Netzwerkstruktur verändert werden. Eine Materialmodifikation kann insbesondere eine lokale Dichteänderung sein, die auch Bereiche ohne Material umfassen kann, die auch abhängig vom gewählten Material sein kann.

In Abhängigkeit von den spezifischen Materialeigenschaften und den konkreten Einstellungen des Lasers, wie beispielsweise Pulsenergie, Pulsdauer und Repetitionsrate, kann es weiterhin auch zu anderen Arten von Materialmodifikationen kommen. Beispielsweise kann der Laser mit einer ersten Einstellung einen Laserstrahl zur Verfügung stellen, der in dem Material zu einer isotropen Brechungsindexänderung führt. Der Laser kann aber auch mit einer weiteren Einstellung einen Laserstrahl zur Verfügung stellen, der in dem Material zu einer doppelbrechenden Brechungsindexänderung führt, so dass das Material lokal doppelbrechende Eigenschaften aufweist.

Insbesondere kann es bei hohen Pulsenergien zu sogenannten Mikroexplosionen kommen, bei denen hochangeregtes, dann gasförmiges Material aus der Fokuszone in das umgebende Material gedrückt wird und ein weniger dichter Bereich oder ein leerer Kern mit umgebendem verdichteten Material entsteht. Die Größe des erhitzten Bereiches ist dabei durch die Strahlgeometrie, insbesondere durch die Modifikationszone des Laserstrahls und den Strahlquerschnitt, bestimmt.

Im Unterschied zur Materialmodifikation umfasst der Materialmodifikationsbereich dabei den gesamten Bereich, in dem die Auswirkungen der Einwirkung des Laserpulses beispielsweise anhand der Zug- als auch Druckspannungen messbar sind. Dies ist insbesondere der Bereich, in dem das Material räumlich gesehen von der Materialmodifikation ausgehend wieder in den Ausgangszustand der unbehandelten Bereiche des Materials übergeht.

Durch die Temperaturgradienten, welche durch die lokale Pulseinwirkung entstehen, kann es beim Erhitzen und/oder beim Abkühlen und Ausbilden der Materialmodifikation zu Spannungen im Materialmodifikationsbereich kommen, die eine Rissbildung begünstigen. Insbesondere können im Materialmodifikationsbereich Zug- als auch Druckspannungen entstehen, die beispielsweise radial oder orthoradial verlaufen. Eine Materialmodifikation geht daher bevorzugt mit einer indizierten Rissbildung, also einer gezielten Schädigung des Materials, einher.

In Abhängigkeit von der gewählten Pulsenergie kann die Materialmodifikation an einer Oberfläche des Materials Materialauswürfe erzeugen. Die Materialauswürfe sind hierbei ein Maß für die Güte der Materialmodifikationen und damit auch für die Trennbarkeit des Materials.

Materialauswürfe sind hierbei Materialansammlungen an einer Oberfläche des Materials, die um den Ort entstehen, an dem die Laserpulse zur Erzeugung einer Materialmodifikation eingebracht werden. Insbesondere bedeutet "eine Oberfläche", dass es sich dabei relativ zur Strahlausbreitungsrichtung sowohl um die Oberseite als auch die Unterseite des Materials handeln kann. Materialauswürfe sind Folgen der Erwärmung des Materials, welches beim Einbringen der Laserpulse aus dem Volumen des Materials herausdringt. es kann dabei aber auch ein Teil des Volumens durch Verdampfung etc. verloren gehen, so dass keine genaue Übereinstimmung der aus dem Material verdrängten und der um die Materialmodifikation herum in den Materialauswürfen abgelagerten Materialvolumina vorliegen muss.

Die Materialmodifikationen werden entlang einer gewünschten Trennlinie in das Material eingebracht. Eine Trennlinie beschreibt hierbei diejenige Linie entlang derer das Material oder Teile des Materials getrennt oder abgetrennt werden sollen.

Durch die eingebrachten Materialmodifikationen entlang einer Trennlinie in das Material, ist das Material quasi perforiert, so dass durch die Trennlinie eine Art Sollbruchstelle im Material definiert ist. Diese Perforation führt in der Regel jedoch nicht zu einer selbstständigen Trennung des Materials. Vielmehr sorgen die Materialmodifikationen entlang der Trennlinie beispielsweise für eine Materialschwächung, sodass beim Aufbringen eines nachfolgenden Trennschritts, beispielsweise durch das Aufbringen einer thermischen Spannung und/oder durch Aufbringen einer mechanischen Spannung, bevorzugt einer Zug- oder Biegespannung, und/oder durch Ätzen mittels mindestens einer nasschemischen Lösung, entlang der Trennlinie getrennt wird.

Die Pulsenergie der Einzellaserpulse oder die Summe der Pulsenergien der Sub-Laserpulse in einem Bereich von 500µJ bis 50mJ. Dadurch wird erreicht, dass vor allem bei dicken Materialien, beispielsweise mit einer Materialdicke von über 1mm, eine gute Trennbarkeit erreicht wird.

Der Trennschritt kann das Aufbringen einer thermischen Spannung entlang der Trennlinie und/oder das Aufbringen einer mechanischen Spannung, bevorzugt einer Zug- oder Biegespannung und/oder das Ätzen mittels mindestens einer nasschemischen Lösung umfassen.

Eine thermische Spannung kann beispielsweise durch eine Erwärmung des Materials entlang der Trennlinie erreicht werden. Beispielsweise kann die Trennlinie mittels eines Dauerstrich-CO2-Lasers erwärmt werden, so dass sich das Material im Materialmodifikationsbereich unterschiedlich im Vergleich zum unbehandelten bzw. nicht erwärmten Material ausdehnt. Die durch die Materialmodifikation begünstigten Risse erfahren dadurch ein Risswachstum, so dass sich eine durchgehende und unverhakte Trennfläche ausbilden kann, durch die die Teile des Materials voneinander getrennt sind.

Eine Zug- oder Biegespannung kann beispielsweise durch das Aufbringen einer mechanischen Belastung auf die durch die Trennlinie separierten Materialteile erzeugt werden. Beispielsweise kann eine Zugspannung aufgebracht werden, wenn auf die durch die Trennlinie separierten Materialteile in der Materialebene entgegengesetzte Kräfte an je einem Kraftangriffspunkt wirken, die jeweils von der Trennlinie weg zeigen. Sind die Kräfte nicht parallel beziehungsweise antiparallel zueinander ausgerichtet, so kann dies zum Entstehen einer Biegespannung beitragen.

Sobald die Zug- oder Biegespannungen größer als die Bindungskräfte des Materials entlang der Trennlinie sind, wird das Material entlang der Trennlinie getrennt.

Das Material kann auch durch Ätzen mit einer nasschemischen Lösung getrennt werden, wobei der Ätzprozess das Material bevorzugt an der Materialmodifikation, also der gezielten Materialschwächung, ansetzt. Indem bevorzugt die durch die Materialmodifikation geschwächten Materialteile geätzt werden, führt dies zu einem Trennen des Materials entlang der Trennlinie.

Dies hat den Vorteil, dass für das jeweilige Material ein ideales Trennverfahren ausgewählt werden kann, so dass eine Trennung des Materials mit einer hohen Güte der Trennkante einhergeht.

Die Laserpulse können eine Wellenlänge zwischen 0,3µm und 1,5µm aufweisen, und/oder die Pulslänge der Einzellaserpulse und/oder der Sub-Laserpulse kann 0,01ps bis 50ps betragen, bevorzugt 0,3-15ps betragen, und/oder die mittlere Leistung des Lasers am Laserausgang kann zwischen 150W und 15kW betragen.

Dies hat den Vorteil, dass über einen großen Parameterbereich das Verfahren für das jeweilige Material optimiert werden kann. Insbesondere erhöht dies die Wahrscheinlichkeit einen für ein Material verfügbare Laserwellenlänge zu finden, bei der das Material teilweise transparent ist.

Der durch die Laserpulse ausgebildete Laserstrahl und das Material relativ zueinander können mit einem Vorschub verschiebbar sein, um die Mehrzahl der Materialmodifikationen entlang der Trennlinie in das Material einzutragen, wobei der Laserstrahl und das Material bevorzugt unter einem Winkel zueinander ausrichtbar insbesondere verkippbar und/oder rotierbar sind.

Relativ zueinander verschiebbar bedeutet, dass sowohl der Laserstrahl translatorisch relativ zu einem ortsfesten Material verschoben werden kann, als auch das Material relativ zum Laserstrahl verschoben werden kann, oder es findet eine Bewegung sowohl des Materials als auch des Laserstrahls statt.

Dadurch kann insbesondere der Fokus des Laserstrahls an verschiedenen Orten des Materials platziert werden, um Materialmodifikationen einzubringen. Neben translatorischen Bewegungen entlang der X-, Y- und Z-Achsen sind insbesondere auch rotatorische Bewegungen möglich, insbesondere Rotationen des Materials um die Strahlausbreitungsrichtung herum. Dies kann Rotationen um alle Eulerwinkel herum umfassen.

Dadurch ist es möglich, den Laserstrahl entlang der Trennlinie zu orientieren.

Die elongierte Modifikationszone ist in Strahlausbreitungsrichtung länger als die Materialdicke L_{M}, und länger als 1,5×L_{M} oder länger als (2×200µm)+L_{M}.

Indem die elongierte Modifikationszone länger als die Materialdicke ist, kann die Materialmodifikation über die gesamten Materialdicke hinweg eingebracht werden. Insbesondere kann auch eine große Fokuslagentoleranz erreicht werden, so dass Materialdickenschwankungen oder Materialunebenheiten, insbesondere bei großformatigen Glassubstraten mit einer Größe von über einem Quadratmeter, vernachlässigt werden können. Jedoch ist zu beachten, dass die benötigte Pulsenergie zum Einbringen einer Materialmodifikation linear mit der Länge der Fokuszone ansteigt.

Der maximale Durchmesser des Strahlquerschnitts senkrecht zur Strahlausbreitungsrichtung in der Modifikationszone kann zwischen 1µm und 50µm liegen, bevorzugt zwischen 2µm und 4µm liegen.

Dadurch können insbesondere Materialmodifikationen mit einer großen lateralen Ausdehnung erzeugt werden, so dass die Trennbarkeit des Materials verbessert wird.

Der durch die Laserpulse ausgebildete Laserstrahl ist zumindest in der elongierten Fokuszone ein quasi nicht-beugender Strahl oder eine kohärente Superposition von mindestens zwei quasi nicht-beugenden Strahlen.

Nicht-beugende Strahlen genügen der Helmholtz-Gleichung: ${∇}^{2} U \left(x, y, z\right) + {k}^{2} U \left(x, y, z\right) = 0$ und weisen eine klare Separierbarkeit in eine transversale und eine longitudinale Abhängigkeit der Form $U \left(x, y, z\right) = {U}_{t} \left(x, y\right) exp \left({ik}_{z}z\right)$ auf. Hierbei ist k=ω/c der Wellenvektor mit seinen transversalen und longitudinalen Komponenten k²=k_{z}²+kₜ² und Uₜ(x,y) eine beliebige komplexwertige Funktion, die nur von den transversalen Koordinaten x,y abhängt. Die z-Abhängigkeit in Strahlausbreitungsrichtung in U(x,y,z) führt zu einer reinen Phasenmodulation, so dass die zugehörige Intensität I der Lösung propagationsinvariant beziehungsweise nicht-beugend ist: $I \left(x, y, z\right) = {\left|U\left(x, y, z\right)\right|}^{2} = I \left(x, y\right)$

Dieser Ansatz liefert verschiedene Lösungsklassen in unterschiedlichen Koordinatensystemen, wie beispielsweise Mathieu-Strahlen in elliptisch-zylindrischen Koordinaten oder Besselstrahlen in zirkularzylindrischen Koordinaten.

Experimentell lassen sich eine Vielzahl von nicht-beugenden Strahlen in guter Näherung, also quasi nicht-beugende Strahlen, realisieren. Diese führen, im Gegensatz zum theoretischen Konstrukt, nur eine endliche Leistung. Ebenso endlich ist die Länge L der Propagationsinvarianz dieser quasi nicht-beugenden Strahlen.

Basierend auf der Norm zur Laserstrahlcharakterisierung ISO11146 1-3 wird der Strahldurchmesser über die sogenannten 2. Momente bestimmt. Hierbei ist die Leistung des Laserstrahls oder auch das Moment 0. Ordnung definiert als: $P = \int dx dy I \left(x, y\right) .$

Die räumlichen Momente 1. Ordnung geben den Schwerpunkt der Intensitätsverteilung an und sind definiert als: $\left〈x\right〉 = \frac{1}{P} \int dx dy x I \left(x, y\right) ,$ $\left〈y\right〉 = \frac{1}{P} \int dx dy y I \left(x, y\right) .$

Basierend auf den vorstehenden Gleichungen lassen sich die räumlichen Momente 2. Ordnung der transversalen Intensitätsverteilung errechnen: $\left〈{x}^{2}\right〉 = \frac{1}{P} \int dx dy {\left(x-\left〈x\right〉\right)}^{2} I \left(x, y\right) ,$ $\left〈{y}^{2}\right〉 = \frac{1}{P} \int dx dy {\left(y-\left〈y\right〉\right)}^{2} I \left(x, y\right) ,$ $\left〈xy\right〉 = \frac{1}{P} \int dx dy \left(x-\left〈x\right〉\right) \left(y-\left〈y\right〉\right) I \left(x, y\right) .$

Mit den so vollständig definierten räumlichen Momenten 2. Ordnung des Laserstrahls lassen sich die Strahldurchmesser, beziehungsweise die Größe der Fokuszone in den Hauptachsen bestimmen. Die Hauptachsen sind hierbei die Richtungen der minimalen und maximalen Ausdehnung des transversalen Strahlprofils, also die Intensitätsverteilung senkrecht zur Strahlausbreitungsrichtung, welche stets orthogonal zueinander verlaufen. Die Fokuszone d des Laserstrahls ergibt sich dann wie folgt: ${d}_{x} = 2 \sqrt{2} {\left\{\left(\left〈{x}^{2}\right〉+\left〈{y}^{2}\right〉\right)+γ{\left[{\left(\left〈{x}^{2}\right〉-\left〈{y}^{2}\right〉\right)}^{2}+4{\left(\left〈xy\right〉\right)}^{2}\right]}^{\frac{1}{2}}\right\}}^{\frac{1}{2}} ,$ ${d}_{y} = 2 \sqrt{2} {\left\{\left(\left〈{x}^{2}\right〉+\left〈{y}^{2}\right〉\right)-γ{\left[{\left(\left〈{x}^{2}\right〉-\left〈{y}^{2}\right〉\right)}^{2}+4{\left(\left〈xy\right〉\right)}^{2}\right]}^{\frac{1}{2}}\right\}}^{\frac{1}{2}} ,$ mit $γ = \frac{\left〈{x}^{2}\right〉 - \left〈{y}^{2}\right〉}{\left|\left〈{x}^{2}\right〉-\left〈{y}^{2}\right〉\right|} .$

Insbesondere ergeben sich durch die Werte dₓ und d_{y} eine lange und eine kurze Hauptachse der transversalen Fokuszone.

Die Fokuszone eines Gauß'schen Strahls ist somit festgelegt über die 2. Momente des Strahls. Insbesondere ergibt sich daraus die Größe der transversalen Fokuszone d^{GF}_{x,y} und die longitudinale Ausdehnung der Fokuszone, die Rayleighlänge z_{R}. Die Rayleighlänge z_{R} ist gegeben durch z_{R}=π(d^{GF}_{x,y})²/4λ. Sie beschreibt die Distanz entlang der Strahlausbreitungsrichtung ausgehend von der Position des Intensitätsmaximums, bei der die Fläche der Fokuszone um den Faktor 2 zugenommen hat. Im Fall eines symmetrischen Gauß'schen Strahls gilt für die Fokuszone d^{GF}₀ = d^{GF}ₓ = d^{GF}_{y}.

Fernerhin definieren wir als transversalen Fokusdurchmesser bei quasi-nicht beugenden Strahlen d^{ND}₀ die transversalen Dimensionen lokaler Intensitätsmaxima als die doppelte kürzeste Distanz zwischen einem Intensitätsmaximum und einem hiervon ausgehenden Intensitätsabfall auf 25%.

Die Fokuszone des quasi nicht-beugenden Strahlen ist ebenfalls über die 2. Momente des Strahls festgelegt. Insbesondere ergibt sich die Fokuszone aus der Größe der transversalen Fokuszone d^{ND}_{x,y} und der longitudinalen Ausdehnung der Fokuszone, die sogenannte charakteristische Länge L. Die charakteristische Länge L des quasi-nicht beugenden Strahls ist definiert über den Intensitätsabfall auf 50%, ausgehend vom lokalen Intensitätsmaximum, entlang der Strahlausbreitungsrichtung. Insbesondere ist die Größe der Fokuszone wie oben gezeigt auf die gesamte Laserleistung normiert und somit unabhängig von der maximalen Leistung, die durch den Strahl transportiert wird.

Ein quasi nicht-beugender Strahl liegt genau dann vor, wenn für d^{ND}_{x,y} ≈ d^{GF}_{x,y}, also ähnlichen transversalen Dimensionen, die charakteristische Länge L die Rayleighlänge des zugehörigen Gaußfokus deutlich überragt, beispielsweise, wenn L>10z_{R}.

Als Untermenge der quasi nicht-beugenden Strahlen sind quasi-Besselstrahlen oder Bessel-ähnliche Strahlen, hier auch Besselstrahlen genannt, bekannt. Hierbei gehorcht die transversale Feldverteilung Uₜ(x,y) in der Nähe der optischen Achse in guter Näherung einer Bessel-Funktion erster Art der Ordnung n. Eine weitere Untermenge dieser Klasse von Strahlen stellen die Bessel-Gauß-Strahlen dar, die aufgrund ihrer einfachen Erzeugung weit verbreitet sind. So erlaubt die Beleuchtung eines Axicons in refraktiver, diffraktiver oder reflektiver Ausführung mit einem kollimierten Gaußstrahl die Formung des Bessel-Gauß-Strahls. Die zugehörige transversale Feldverteilung in der Nähe der optischen Achse gehorcht dabei in guter Näherung einer Bessel-Funktion erster Art der Ordnung 0, die von einer Gauß-Verteilung eingehüllt ist.

Entsprechend kann es von Vorteil sein einen erfindungsgemäßen quasi nicht-beugenden Strahl, insbesondere einer Besselstrahl, zum Bearbeiten eines Materials zu verwenden, da hiermit eine große Fokuslagentoleranz erreicht werden kann.

Typische Bessel-Gauß Strahlen zum Bearbeiten eines Materials weisen beispielsweise eine d^{ND}_{x,y}=2,5 µm große transversale Fokuszone auf, wohingegen die charakteristische Länge 50 µm betragen kann. Für einen Gauß'schen Strahl mit einer d^{GF}_{x,y}=2,5 µm großen transversalen Fokuszone beträgt die Rayleighlänge in Luft jedoch lediglich z_{R}≈5µm bei λ=1µm. In diesen für die Materialbearbeitung relevanten Fällen kann demnach L>>10z_{R} gelten.

Eine kohärente Superposition der quasi-nicht beugenden Strahlung ergibt sich insbesondere durch Überlagerung mindestens zweier quasi nicht-beugender Strahlen. Dadurch ist es möglich weitere Strahlprofile und somit Formen der Materialmodifikationen zu erzeugen.

Der Laserstrahl weist einen nicht-radialsymmetrischen Strahlquerschnitt senkrecht zur Strahlausbreitungsrichtung auf, wobei der Strahlquerschnitt beziehungsweise die Einhüllende des Strahlquerschnitts elliptisch geformt ist.

Nicht-radialsymmetrisch bedeutet hierbei beispielsweise, dass die transversale Fokuszone in eine Richtung gestreckt ist. Eine nicht-radialsymmetrischer Fokuszone kann jedoch auch bedeuten, dass die Fokuszone beispielsweise kreuzförmig ist, oder dreieckig ist oder N-eckig ist, beispielsweise fünfeckig ist. Eine nicht-radialsymmetrische Fokuszone kann zudem weitere rotations- und spiegelsymmetrische Strahlquerschnitte umfassen.

Beispielsweise kann eine elliptische Fokuszone senkrecht zur Ausbreitungsrichtung vorliegen, wobei die Ellipse eine lange Achse dₓ und eine kurze Achse d_{y} aufweist. Eine elliptische Fokuszone liegt demnach vor, wenn das Verhältnis dₓ/d_{y} größer als 1 ist, insbesondere dₓ/d_{y} = 1,5 ist. Die elliptische Fokuszone des konkret vorliegenden Strahls kann einer idealen mathematischen Ellipse entsprechen. Die vorliegende konkrete Fokuszone des quasi nicht-beugenden Strahls kann aber auch lediglich die oben genannten Verhältnisse aus langer Hauptachse und kurzer Hauptachse aufweisen, aber eine andere Kontur aufweisen - beispielsweise eine angenäherte mathematische Ellipse, eine Hantelform oder eine andere symmetrische oder asymmetrische Kontur, die von einer mathematisch idealen Ellipse eingehüllt ist.

Insbesondere lassen sich über quasi nicht-beugende Strahlen elliptische quasi nicht-beugende Strahlen erzeugen. Elliptisch quasi nicht-beugende Strahlen weisen hierbei spezielle Eigenschaften auf, die sich aus der Analyse der Strahlintensität ergeben. Beispielsweise weisen elliptische quasi nicht-beugende Strahlen ein Hauptmaximum auf, welches mit dem Zentrum des Strahls zusammenfällt. Das Zentrum des Strahls ist hierbei gegeben durch den Ort, an dem sich die Hauptachsen schneiden. Insbesondere können sich elliptische quasi nicht-beugende Strahlen aus der Überlagerung mehrere Intensitätsmaxima ergeben, wobei in diesem Fall lediglich die Einhüllende der beteiligten Intensitätsmaxima elliptisch ist. Insbesondere müssen die einzelnen Intensitätsmaxima kein elliptisches Intensitätsprofil aufweisen.

Die dem Hauptmaximum nächstgelegenen Nebenmaxima, die sich aus der Lösung der Helmholtz-Gleichung ergeben, weisen hierbei eine relative Intensität von über 17% auf. Somit wird - je nach transportierter Laserenergie im Hauptmaximum, auch in den Nebenmaxima so viel Laserenergie geführt, dass eine Materialbearbeitung ermöglicht wird. Zudem liegen die nächstgelegenen Nebenmaxima immer auf einer Geraden, die senkrecht zur langen Hauptachse, beziehungsweise parallel zur kurzen Hauptachse ist, und durch das Hauptmaximum verläuft.

Insbesondere weisen die Konturen der Strahlquerschnitte Orte mit unterschiedlichen Kurvenradien auf. Beispielsweise ist bei einem elliptischen Strahlquerschnitt der Kurvenradius an der Stelle, an der die kleine Halbachse die Ellipse schneidet, besonders groß, während der Kurvenradius an der Stelle, an der die große Halbachse die Ellipse schneidet, besonders klein ist. Beispielsweise kann sich an den Punkten kleiner Kurvenradien, beispielsweise Spitzen und Ecken, die Möglichkeit für Materialspannungen ergeben zu relaxieren, so dass es dort zu einer induzierten Rissbildung kommt. Durch eine kontrollierte Rissausbreitung zwischen den Materialmodifikationen ist es möglich die Trennbarkeit des Materials entlang der Trennlinie zu verbessern.

Die lange Achse des nicht-radialsymmetrischen Strahlquerschnitts kann senkrecht zur Strahlausbreitungsrichtung entlang der Trennlinie und/oder entlang der Vorschubrichtung orientiert sein.

Typischerweise findet eine Rissbildung entlang einer Vorzugsrichtung des nicht-radialsymmetrischen Strahlquerschnitts statt - beispielsweise findet eine Rissausbreitung hauptsächlich in Richtung einer längeren Ausdehnung des Strahlquerschnitts statt, welche mit kleineren Radien der Kontur des Strahlquerschnitts an den in dieser Vorzugsrichtung liegenden äußeren Konturkanten einhergeht.

Insbesondere kann eine gezielte Rissführung durch eine Rotation des nicht-radialsymmetrischen Strahlquerschnitts und/oder des Materials begünstigt werden, so dass durch die Drehung eine Vorzugsrichtung des nicht-radialsymmetrischen Strahlquerschnitts immer entlang der Trennlinie orientiert ist.

Ist die Vorschubrichtung zwischen Laserstrahl und Material beispielsweise senkrecht zu einer Achse ausgerichtet, entlang derer eine bevorzugte Rissausbreitung stattfindet, dann ist ein Treffen der Risse benachbarter Materialmodifikationen unwahrscheinlich. Ist die Vorschubrichtung hingegen parallel zur Achse der bevorzugten Rissausbreitung ausgerichtet, dann ist es wahrscheinlich, dass sich die Risse benachbarter Materialmodifikationen treffen und vereinen. Durch die Drehung des Strahlquerschnitts und/oder des Werkstücks kann so auch bei geschwungenen Trennlinien eine gezielte Rissführung über die gesamte Länge der Trennlinie sichergestellt werden. Dadurch ist es möglich das Material entlang beliebig geformter Trennlinien zu trennen.

Die lange Achse des nicht-radialsymmetrischen Strahlquerschnitts weist eine nicht-verschwindende Intensität mit einem Interferenzkontrast von weniger als 0,9 auf.

Der elliptische quasi nicht-beugende Strahl weist hierbei entlang der langen Hauptachse eine nicht verschwindende Intensität mit einem Interferenzkontrast Iₘₐₓ-Iₘᵢₙ/(Iₘₐₓ+Iₘᵢₙ)<0,9 auf, so dass der Strahl entlang der langen Hauptachse überall Laserenergie transportiert.

Iₘₐₓ ist hierbei die maximale Strahlintensität entlang der langen Hauptachse, während Iₘᵢₙ die minimale Strahlintensität ist. Wenn Iₘᵢₙ = 0, dann kommt es entlang der langen Hauptachse zu einer vollständigen Interferenz und es ergibt sich ein Interferenzkontrast von 1. Wenn Iₘᵢₙ > 0, dann kommt es entlang der langen Hauptachse lediglich zu einer teilweisen oder zu keiner Interferenz, so dass der Interferenzkontrast < 1 ist.

Ist der Interferenzkontrast entlang der langen Hauptachse kleiner als 0,9, so kommt es entlang der langen Hauptachse zu keiner vollständigen Interferenz, sondern lediglich zu einer teilweisen Interferenz, welche nicht zur vollständigen Auslöschung der Laserintensität am Ort des

Intensitätsminimums Iₘᵢₙ führt. Dies ist beispielsweise der Fall, wenn der quasi nicht-beugende Strahl erfindungsgemäß mit einem doppelbrechenden Element, beispielsweise einem Quartz Angle Displacer oder einem Quartz Beam Displacer oder einer Kombination davon erzeugt wird.

Ein elliptischer quasi nicht-beugender Strahl kann entlang der langen Hauptachse jedoch auch eine verschwindende Intensität und einen Interferenzkontrast von 1 aufweisen, so dass der Strahl entlang der langen Hauptachse nicht überall Laserenergie transportiert. Dies ist beispielsweise der Fall, wenn der quasi nicht-beugende Strahl mit einem modifizierten Axicon erzeugt wird.

Der durch die Laserpulse ausgebildete Laserstrahl kann unter einem Bearbeitungswinkel auf die Materialoberfläche treffen, der bevorzugt kein rechter Winkel ist, wobei der Bearbeitungswinkel für Materialdicken kleiner als 2mm kleiner als 20° ist und für Materialdicken größer als 2mm kleiner als 10° insbesondere kleiner als 5° ist.

Indem der Laserstrahl unter einem Winkel auf die Materialoberfläche fällt, erfährt der Laserstrahl beim Eintritt in das Material eine Brechung. Dementsprechend erfolgt das Einbringen der Materialmodifikation nicht senkrecht zur Oberfläche, sondern unter dem Brechwinkel, der sich nach dem Snellius'schen Brechungsgesetz bestimmt. Dadurch wird erreicht, dass das Material keine Kanten aufweist, die im rechten Winkel geformt sind. Beispielsweise können schräge Kanten erzeugt werden entlang derer Materialien wieder zusammengesetzt und beispielsweise gefügt werden können. Beispielsweise kann so ein laterales Aneinanderfügen von Materialien erreicht werden.

Insbesondere hängt der Bearbeitungswinkel der Modifikationszone im Material, bei dem noch eine gute Trennbarkeit erreicht wird, von der Materialdicke ab.

Die Einzellaserpulse und/oder Pulszüge können durch eine positionsgesteuerte Pulsauslösung vom Lasersystem ausgelöst werden, wobei die Position bevorzugt durch die Position des durch die Laserpulse ausgebildeten Laserstrahls auf dem Material gegeben ist.

Eine positionsgesteuerte Pulsauslösung kann über einen Detektor realisiert werden, der den Ort des Materials beziehungsweise der Vorschubvorrichtung oder den Vorschubvektor und die Position des Laserstrahls ausliest.

Dadurch kann erreicht werden, dass entlang der Trennlinie in gleichen Abständen Materialmodifikationen in das Material eingebracht werden. Dadurch kann insbesondere vermieden werden, dass Materialmodifikationen überlappen, wie es bei einer konstanten Laserpulsrate und variierender Vorschubgeschwindigkeit auftreten kann.

### Kurze Beschreibung der Figuren

Bevorzugte weitere Ausführungsformen der Erfindung werden durch die nachfolgende Beschreibung der Figuren näher erläutert. Dabei zeigen:
- Figur 1A, B, C: eine schematische Darstellung zur Durchführung des Verfahrens;
- Figur 2A, B: ein Mikroskop-Bild und Querschnitt einer Materialmodifikation mit Materialauswurf;
- Figur 3A, B, C, D, E, F: eine schematische Darstellung von Strahlquerschnitten quasi nicht-beugender Strahlen;
- Figur 4A, B, C, D: eine Analyse der Strahlquerschnitte quasi nicht-beugender Strahlen;
- Figur 5: eine schematische Darstellung eines zusammengesetzten elliptischen quasi nicht-beugenden Strahls;
- Figur 6A, B, C: eine weitere schematische Darstellung zur Durchführung des Verfahrens;
- Figur 7A, B, C, D: eine schematische Darstellung elliptischer Strahlquerschnitte und Materialmodifikationen und deren Ausrichtung an einer Trennlinie;
- Figur 8A, B: eine schematische Darstellung der Vorrichtung zur Durchführung des Verfahrens;
- Figur 9A, B: eine schematische Darstellung zur Durchführung des Verfahrens; und
- Figur 10: Mikroskopaufnahmen von verfahrensgemäß erzeugten Materialmodifikationen.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen und auf eine wiederholte Beschreibung dieser Elemente wird teilweise verzichtet, um Redundanzen zu vermeiden.

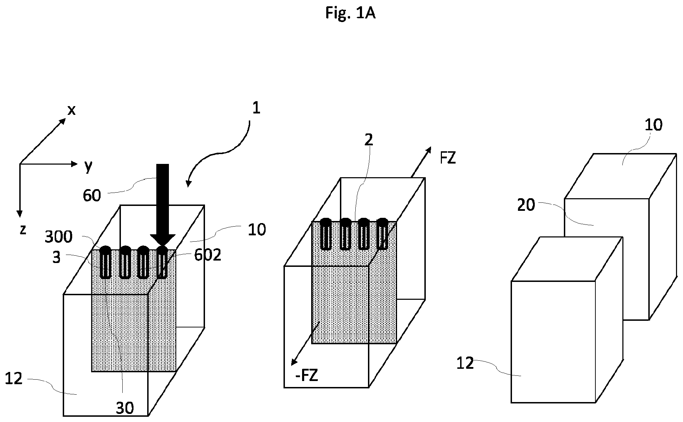

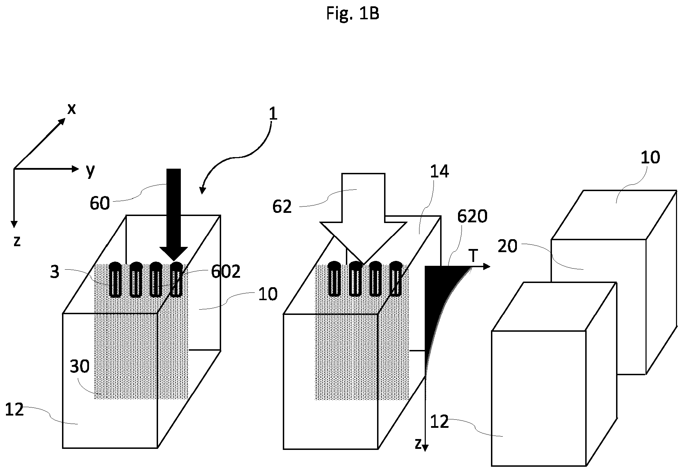

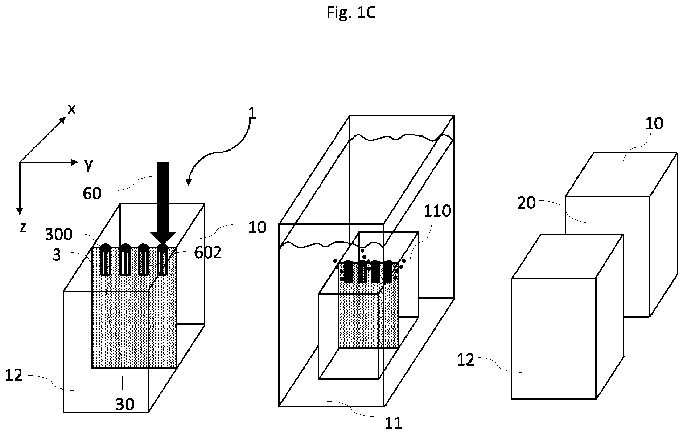

In Figur 1 ist schematisch das hier beschriebene Trennungsverfahren zum Trennen eines zumindest teilweise transparenten Materials 1 dargestellt.

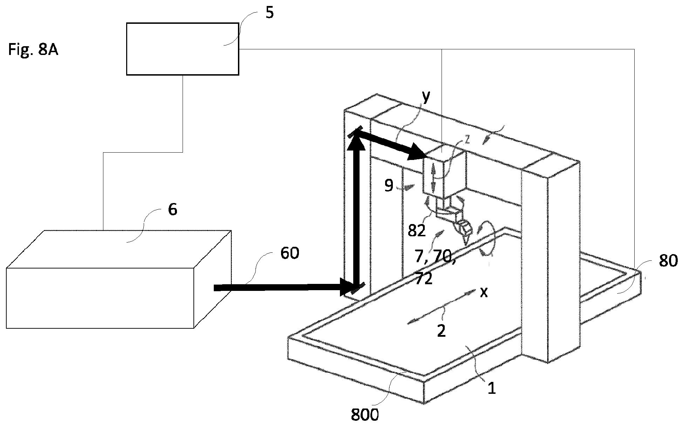

Um das Material 1 zu trennen, werden Laserpulse eines Ultrakurzpulslasers 6 (siehe beispielsweise Figur 8A) in das Material 1 fokussiert. In dem Laserstrahl 60 laufen die Laserpulse, die von dem Material 1 mindestens teilweise in der Modifikationszone 602 des Laserstrahls 60 absorbiert werden, um auf diese Weise eine Materialmodifikation 3 in das Material 1 einzubringen. Die schraffierte Ebene zeigt hierbei die Ebene unterhalb der Trennlinie 2, entlang derer das Material 1 getrennt wird. Idealerweise entspricht diese Ebene der späteren Trennfläche 20.

Durch die lineare und/oder nicht-lineare Absorption der Laserpulse in dem Material 1 kann es zur Erzeugung von Materialmodifikationen 3 kommen. Beispielsweise kann dadurch die allgemeine Struktur des Materials 1 oder die Dichte des Materials geändert werden, um auf diese Weise die Materialmodifikationen 3 auszubilden.

Es ist aber auch möglich, dass es durch die Absorption der Laserpulse zu sogenannten Mikroexplosionen kommt, bei denen das Material 1 schlagartig in der Modifikationszone 602 des Laserstrahls verdampft wird. Das hochangeregte, dann gasförmige Material 1 wird durch den hohen Druck in das umliegende Material 1 gerückt, so dass das Material 1 an der Stoßfront verdichtet wird. Im Bereich der Modifikationszone 602 entsteht dadurch ein weniger dichter oder leerer Kern (engl. "Void"), welcher von dem verdichteten Material umgeben ist. Insbesondere kann durch die Mikroexplosionen auch ein Teil des Materials aus der Modifikationszone 602 nach außen dringen, wo es sich an der Oberfläche des Materials 1 ablagert und Materialauswürfe 300 bildet.

Diese Modifikationen ergeben die Materialmodifikation 3. Um die Materialmodifikation 3 herum wird ein Materialmodifikationsbereich 30 ausgebildet. In dem Materialmodifikationsbereich 30 geht das Material von dem Zustand, der in der Materialmodifikation 3 vorliegt, nach und nach wieder in seinen Ursprungszustand über, je weiter entfernt das Material von der Materialmodifikation 3 betrachtet wird. Der Ursprungszustand kann beispielsweise der unbearbeitete Zustand des Materials sein, der beispielsweise in benachbarten Punkten im Material 1 vorliegt. Unter dem Ursprungszustand wird hier aber auch der Zustand des Materials 1 verstanden, welcher vor dem Einbringen der Materialmodifikation 3 vorlag.

Die Laserpulse können eine Wellenlänge zwischen 0,3µm und 1,5µm aufweisen und/oder die Pulslänge der Laserpulse kann 0,01ps bis 50ps betragen, bevorzugt 0,3-15ps betragen und/oder die mittlere Leistung des Lasers kann 150W bis 15kW betragen. Die Laserenergie kann in Form von Einzellaserpulsen in das Material eingebracht werden, wobei die Repetitionsrate der Einzellaserpulse 1kHz bis 2MHz beträgt. Die Laserenergie kann aber auch in Form von Pulszügen, umfassend mehrere Sub-Laserpulse, in das Material eingebracht werden, wobei die Repetitionsfrequenz der Sub-Laserpulse des Pulszugs zwischen 2MHz und 100GHz insbesondere 12,5 MHz bis 100 MHz betragen kann, ferner wobei ein Pulszug bevorzugt 2 bis 20 Sub-Laserpulse umfassen kann und/oder die Summe der Pulsenergien der Sub-Laserpulse eines Pulszugs zwischen 500µJ und 50mJ groß sein kann.

Beispielsweise kann eine Materialmodifikation 3 mit einem Laser mit 1µm Wellenlänge, einer Pulsdauer von 1ps und einer mittleren Leistung von 1000W erzeugt werden. Der Laserpuls kann in Form eines Einzelpulses in das Material 1 eingebracht werden, wobei die Repetitionsrate des Lasers beispielsweise 100kHz beträgt.

In der Materialmodifikation 3 und dem Materialmodifikationsbereich 30 kann es zu lokalen Spannungen kommen, die eine Rissbildung begünstigen. Beispielsweise kann das Material 1 durch lokale Erhitzung eine andere Dichte - beispielsweise eine geringere Dichte - aufweisen und dadurch eine Druckspannung im Materialmodifikationsbereich 30 aufbauen. In dem erhitzten Bereich kann aber auch eine höhere Dichte vorliegen und somit eine Zugspannung im Materialmodifikationsbereich 30 aufgebaut werden. Wird die Zug- und/oder Druckspannung zu groß, beispielsweise größer als die Zug- oder Druckfestigkeit des unbehandelten Materials, kann es zur spontanen Ausbildung eines Risses kommen.

Wie in der Figur 1 gezeigt, werden mehrere Materialmodifikationen 3 in das Material 1 eingebracht. Um jede Materialmodifikation 3 herum bilden sich Materialmodifikationsbereiche 30 aus. Die Platzierung der Materialmodifikationen 3 geschieht hierbei entlang der gewünschten Trennlinie 2. Die Trennlinie 2 ist eine gedachte Linie entlang derer das Material 1 getrennt werden soll.

Durch die eingebrachten Materialmodifikationen 3 entlang der Trennlinie 2 in das Material 1, wird das Material 1 quasi perforiert, so dass durch die Trennlinie 2 eine Art Sollbruchstelle im Material 1 definiert ist. Diese Perforation führt in der Regel jedoch nicht zu einer selbstständigen Trennung des Materials 1. Vielmehr sorgen die Materialmodifikationen 3 entlang der Trennlinie 2 beispielsweise für eine gezielte Materialschwächung und/oder einen gezielten Eintrag von Rissen 32, die entlang der Trennlinie 2 eine Materialschwächung hervorrufen.

Nachdem mittels des Laserstrahls 6 die Materialmodifikationen 3 in das Material 1 eingebracht sind, kann beispielsweise in einem nachfolgenden Trennschritt durch Aufbringen einer Zugkraft FZ auf die durch die Trennlinie 2 voneinander getrennten Materialhälften 10 und 12 das Material 1 physisch getrennt werden. Es ist insbesondere auch möglich, das Material 1 durch Aufbringen einer Biegespannung auf die Materialhälften 10, 12 zu trennen (nicht gezeigt).

In Figur 1B ist ein analoges Verfahren gezeigt, bei dem die Materialhälften in einem Trennschritt nicht mit einer mechanischen Kraft getrennt werden, sondern durch Aufbringen einer thermischen Spannung.

Nachdem die Materialmodifikationen 3 eingebracht sind, kann ein thermischer Gradient 620 über den Materialmodifikationen 3 erzeugt werden. Zum Einbringen des thermischen Gradienten 620 kann beispielsweise ein Dauerstrich-CO2-Laser 62 verwendet werden.

Der Fokus des Dauerstrich-CO2-Lasers 62 kann zur Erzeugung des thermischen Gradienten 620 beispielsweise wenige Mikrometer unter der Oberfläche 14 platziert werden, so dass die Trennung des Materials 1 schädigungsarm verläuft und eine glatte Bruchkante beziehungsweise Trennfläche 20 entsteht. Der Fokus kann aber auch in einem anderen Abstand zur Oberfläche positioniert sein. Generell wird ein Großteil der Dauerstrich-CO2-Lasersstrahlung bereits wenige Nanometer unter der Oberfläche des Materials absorbiert, so dass zumindest keine starke Abhängigkeit von der Positionierung des Fokus des Dauerstrich-CO2-Lasers 62 besteht.

Durch die dominante Absorption in der Nähe der oberen Oberfläche 14 des Materials ist die Temperatur dort größer, als an der unteren Oberfläche. Dadurch entsteht ein thermischer Gradient T(z). Durch die thermische Ausdehnung des Materials 1, die in erster Näherung linear in der Temperatur ist, dehnt sich das Material 1 an der oberen Oberfläche 14 stärker aus, als an der unteren Oberfläche. Dadurch kommt es zu unterschiedlich starken Materialspannungen entlang der Z-Achse.

Die verschiedenen Materialspannungen laufen durch die eingebrachten Materialmodifikationen 3 hindurch. Dort können die Materialspannungen vorzugsweise relaxieren, was zur einer Rissbildung führt. Die Rissbildung findet zwischen den verschiedenen benachbarten Materialmodifikationen 3 statt. So kommt es zu einer Rissbildung, die das Material 1 schließlich in die beiden Materialhälften 10 und 12 trennt.

In Figur 1C ist ein weiteres analoges Verfahren gezeigt, bei dem die Materialhälften 10, 12 in einem Trennschritt mittels einer nasschemischen Reaktion getrennt werden. Zu diesem Zweck wird das mit den Materialmodifikationen 3 perforierte Material 1 in ein chemisches Bad 11 gegeben. Das chemische Bad 11 enthält hierbei ein Lösungsmittel, welches in der Lage ist, das Material 1 abzutragen und zu ätzen. Insbesondere findet der Ätzvorgang bei den zuvor eingebrachten Materialmodifikationen 3 statt, da dort die Materialschwächung besonders groß ist und die Änderung der physikalischen und/oder chemischen Eigenschaften am Ort der Materialmodifikation 3 die Reaktion besonders vorteilhaft ablaufen lässt. Gewissermaßen kann eine Materialmodifikation 3 als ein Katalysator der Ätzreaktion wirken. Die Reaktion ist in Figur 1C schematisch durch die Entstehung von Reaktionsblasen 110 im chemischen Bad 11 angedeutet.

Sobald das Material 1 durchgeätzt ist, ist das Material 1 in beide Materialhälften 10, 12 getrennt. Sofern das Material 1 nach dem chemischen Bad 11 noch nicht getrennt ist, beispielsweise da das chemische Bad 11 ausschließlich die Materialmodifikationen 3 weggeätzt hat, so ist das Material 1 weiter entlang der Trennlinie 2 gezielt geschädigt worden, so dass beispielsweise durch Aufbringen einer Zug- oder Biegespannung das Material 1 in die Materialhälften 10, 12 getrennt werden kann.

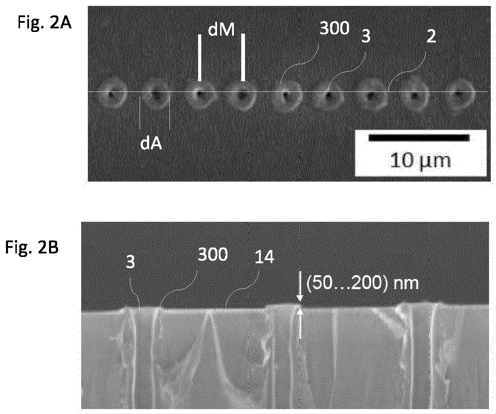

In Figur 2A ist ein Mikroskop-Bild der Oberfläche eines bearbeiteten Materials 1 gezeigt. In das Material 1 wurden entlang der Trennlinie 2 runde Materialmodifikationen 3 in einem Abstand dM=5µm eingebracht. Die Materialmodifikationen 3 haben die Form eines Lochkanals, wobei das Material der äußeren Mantelfläche des Lochkanals durch Mikroexplosionen beim Einbringen der Materialmodifikation 3 verdichtet wurde. Um die runde Öffnung der Materialmodifikation 3, beziehungsweise des Lochkanals, herum entstehen an der Oberfläche des Materials 1 runde Materialauswürfe 300. Diese Materialauswürfe 300 weisen einen Außendurchmesser dA auf. Der Außendurchmesser der Materialauswürfe 300 ist hier 3µm.

In Figur 2B ist ein Dickenquerschnitt durch Figur 2A gezeigt. Es ist deutlich zu sehen, dass die Materialauswürfe eine Höhe über der Oberfläche des Materials 1 von 50nm bis 200nm aufweisen. Der Durchmesser und die Höhe der Materialauswürfe 300 sind hierbei durch die Pulsenergie und den Strahlquerschnitt des Laserstrahls vorgegeben. Insbesondere ist zu sehen, dass die Materialmodifikation 3 an der oberen Oberfläche 14 beginnt. Dies ist eine Folge davon, dass die elongierte Modifikationszone 602 die Oberfläche 14 durchdringt, es also insbesondere eine gemeinsame Schnittfläche gibt.

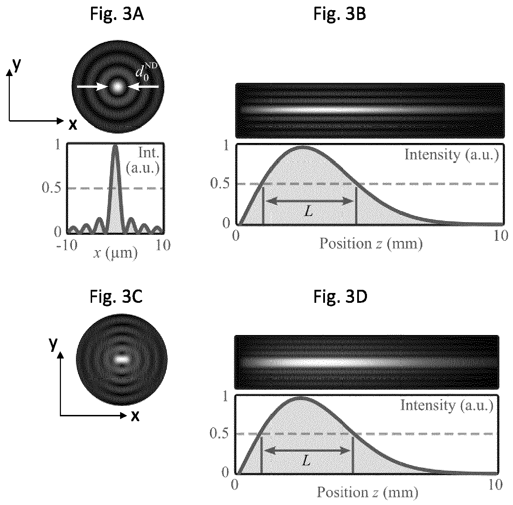

In Figur 3A ist der Intensitätsverlauf und Strahlquerschnitt 4 eines quasi nicht-beugenden Laserstrahls gezeigt. Insbesondere ist der quasi nicht-beugende Strahl ein Bessel-Gauß-Strahl. Im Strahlquerschnitt 4 in der x-y-Ebene weist der Bessel-Gauß-Strahl eine Radialsymmetrie auf, so dass die Intensität des Laserstrahls nur vom Abstand zur optischen Achse abhängt. Insbesondere ist der transversale Strahldurchmesser d^{ND}_{x,y} zwischen 0,25µm und 10µm groß.

In Figur 3B ist der longitudinale Strahlquerschnitt 4, also der Strahlquerschnitt 4 in Strahlausbreitungsrichtung, gezeigt. Der Strahlquerschnitt 4 weist eine elongierte Fokuszone auf, die etwa 3mm groß ist. Damit ist die Fokuszone in Ausbreitungsrichtung deutlich größer als der Strahlquerschnitt 4, so dass eine elongierte Fokuszone 600 vorliegt.

In Figur 3C ist analog zu Figur 3A ein nicht beugender Strahl gezeigt, der einen nicht-radialsymmetrischen Strahlquerschnitt 4 aufweist. Insbesondere erscheint der Strahlquerschnitt 4 in der y-Richtung gestreckt, nahezu elliptisch.

In Figur 3D ist die longitudinale Fokuszone 600 des Bessel-Strahls gezeigt, die erneut eine Ausdehnung von etwa 3µm aufweist. Auch der Bessel-Strahl weist dementsprechend eine in Strahlausbreitungsrichtung elongierte Fokuszone auf.

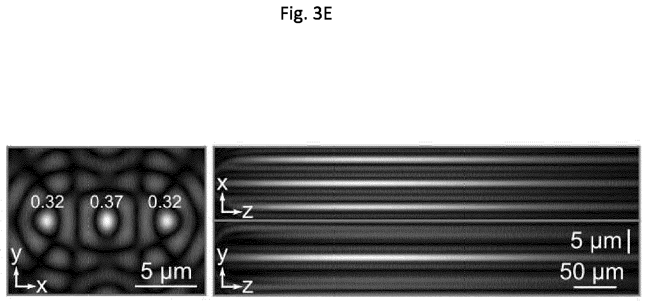

In Figur 3E ist eine kohärente Überlagerung verschiedener quasi nicht-beugender Strahlen gezeigt. Durch die Überlagerung mehrerer quasi nicht-beugender Strahlen können Strahlprofile erzeugt werden, die mit einem einzelnen Laserstrahl nicht erzielt werden könnten. Die Bezeichnungen der Intensitätsmaxima in der x-y-Ebene geben die gerundete Intensitätsverteilung relativ zur Gesamtintensität an.

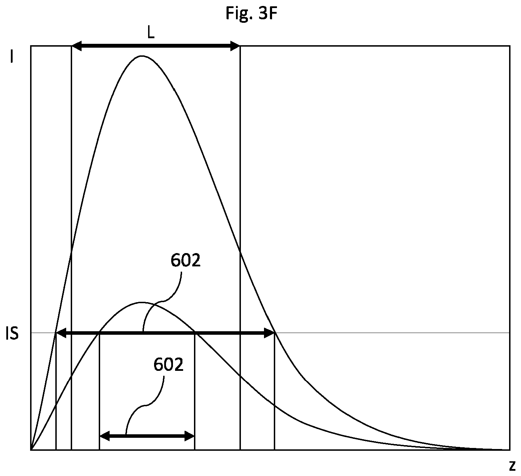

In Figur 3F sind die Intensitätsverläufe zweier Laserstrahlen mit unterschiedlicher Laserleistung jedoch mit gleichem Gauß-Bessel-förmigem Strahlquerschnitt in z-Richtung gezeigt. Beide Strahlprofile weisen die selbe charakteristische Länge L auf, da diese über den Abfall der Laserintensität auf 50% des Intensitätsmaximums definiert ist. Jedoch weist das Material selber eine bestimmte Intensitätsschwelle IS auf, ab der eine Bearbeitung des Materials erfolgen kann. Als Länge der Modifikationszone 602 ist hierbei die Länge definiert über der die Intensität des Laserstrahls über der Intensitätsschwelle IS des Materials liegt. Für große Laserleistungen ergibt sich dadurch eine große Modifikationszone 602 des Laserstrahls, während für kleine Laserleistungen der Laserstrahl eine kleine Modifikationszone 602 aufweist. Die Modifikationszone 602 des Laserstrahls skaliert somit mit der transportierten Laserleistung.

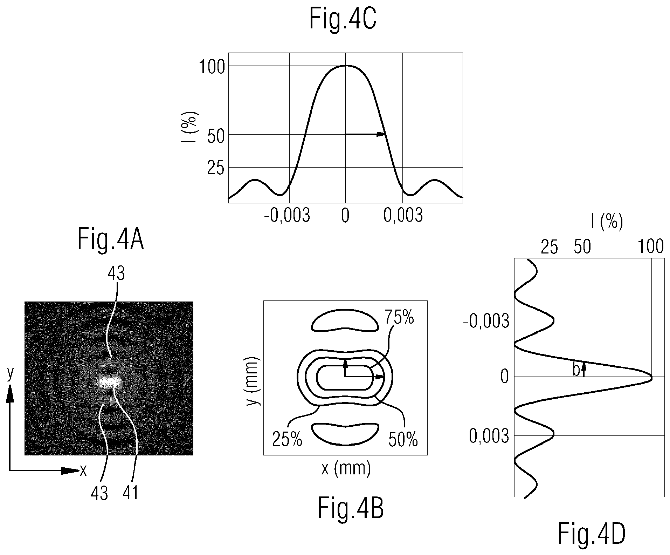

In Figur 4 ist eine detaillierte Analyse des Strahlquerschnitts 4 aus Figur 3C, D gezeigt. In Figur 4A ist die transversale Intensitätsverteilung des Laserstrahls 60 gezeigt, wobei sich das Hauptmaximum und die Nebenmaxima aus der Lösung der Helmholtz Gleichung ergeben.

In Figur 4B sind die sogenannten Iso-Intensitätslinien der Intensitätsverteilung aus Figur 4A gezeigt, wobei die Linien dort eingezeichnet sind, wo die relative Intensität des Laserstrahls 25%, oder 50%, oder 75% beträgt. Es ist deutlich sichtbar, dass das Hauptmaximum 41 der Intensitätsverteilung eine annähernd elliptische Form aufweist, wobei die Ausdehnung entlang der x-Achse deutlich größer ist, als die Ausdehnung entlang der y-Achse. Insbesondere schließen sich das Hauptmaximum zwei nierenförmige Nebenmaxima 43 an, die eine deutlich geringere relative Intensität aufweisen.

In Figur 4C ist ein Querschnitt durch die Intensitätsverteilung aus Figur 4A durch das Zentrum des Hauptmaximums entlang der x-Achse gezeigt. Im Zentrum des Hauptmaximums 41 weist die Intensitätsverteilung ihr Maximum auf, wobei die relative Intensität hier definitionsgemäß bei 100% liegt. Entlang der positiven und negativen x-Richtung fällt die Intensitätsverteilung ab, bis bei etwa 0,003 mm ein Minimum in der relativen Intensitätsverteilung erreicht ist, welches jedoch von 0% verschieden ist. Demzufolge wird auch zwischen dem Hauptmaximum 41 und den Nebenmaxima 43 des Laserstrahls 60 Laserenergie transportiert.

In Figur 4D ist ein Querschnitt durch die Intensitätsverteilung aus Figur 4A durch das Zentrum des Hauptmaximums 41 entlang der y-Achse gezeigt. Abermals ist hier das Intensitätsmaximum im Zentrum zu finden, jedoch ist der Intensitätsabfall entlang der y-Richtung deutlich schneller, sodass bei etwa 0,002 mm das Intensitätsminimum erreicht ist. Hierbei ist das Intensitätsminimum exakt null, da hier für den Laserstrahl 60 eine vollständige Interferenz vorliegt. Insbesondere sind bei größeren Werten auf der y-Achse erneut Nebenmaxima 43 zu finden, die beispielsweise über einem relativen Intensitätswert von 25% liegen. Dies ist im x-Achsenquerschnitt aus der Figur 4C nicht der Fall. Die Eigenschaften des elliptischen Strahlquerschnitts 4 unterscheiden sich somit entlang der verschiedenen Ausbreitungsrichtungen.

Insbesondere ist in den Figuren 4C und 4B gezeigt, dass die lange Halbachse a vom Zentrum des Hauptmaximums bis zum Abfall der relativen Intensität auf 50% gemessen wird. Analog wird die Länge der kurzen Halbachse b vom Zentrum des Hauptmaximums bis zum Abfall der relativen Intensität auf 50% gemessen. Hierbei stehen die lange und kurze Halbachse senkrecht aufeinander.

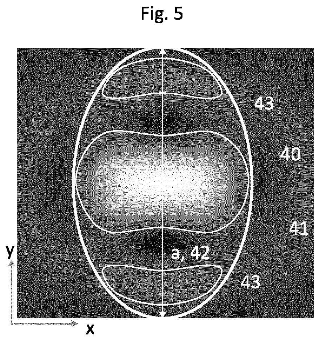

In der Figur 5 ist gezeigt, dass sich elliptische quasi nicht-beugende Strahlen aus der Überlagerung mehrerer Intensitätsmaxima ergeben können, wobei in diesem Fall lediglich die Einhüllende der beteiligten Intensitätsmaxima elliptisch ist. Insbesondere müssen die einzelnen Intensitätsmaxima kein elliptisches Intensitätsprofil aufweisen.

Im vorliegenden Fall weist der Strahlquerschnitt neben dem ausgeprägten Hauptmaximum 41 auch zwei nierenförmige Nebenmaxima 43 auf. In den Nebenmaxima wird bis zu 17% der Laserenergie des Hauptmaximums 41 transportiert. Sofern die Laserpulsenergie groß genug ist, genügt auch die in den Nebenmaxima 43 transportierte Laserpulsenergie, um eine Materialmodifikation 3 hervorzurufen. Dadurch kann die geometrische Form der Modifikationszone 602 mit der Wahl der Laserpulsenergie beeinflusst werden.

Beispielsweise kann die Laserpulsenergie so gewählt werden, dass bereits die Bereiche oberhalb der 25%-Iso-Intensitätslinien Materialmodifikationen einbringen können. Das Hauptmaximum 41 sowie die beiden Nebenmaxima 43 bilden dann jeweils beispielsweise überlappende Materialmodifikationsbereiche 30 aus, sodass sich insgesamt eine elliptische Materialmodifikation 3 ergibt, deren lange Achse sich in y-Richtung erstreckt. Somit ist auch eine Rissausbildung entlang der y-Richtung zu erwarten.

Insbesondere wird sich aufgrund dessen auch eine elliptische Materialmodifikation 3 ergeben, deren lange Achse analog entlang der y-Achse ausgerichtet ist.

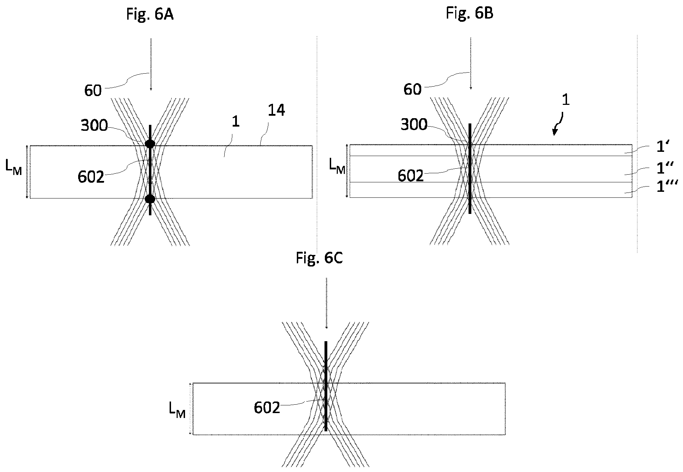

Die Figuren 6A, B zeigen, dass die elongierte Modifikationszone 602 auf unterschiedliche Art und Weise in das Material 1 eingebracht werden kann. In Figur 6A weist die elongierte Modifikationszone 602 eine größere Länge auf, als das Material dick ist. Insbesondere ist die elongierte Modifikationszone 602 größer als 1,5×L_{M}. Dadurch ist es möglich, die Modifikationszone 602 so zu positionieren, dass die Modifikationszone 602 die obere Oberfläche 14 und die untere Oberfläche durchdringt. Dadurch ist es insbesondere möglich, dass die Materialmodifikation 3 über der gesamten Materialdicke L_{M} eingebracht wird. Dies führt zu einer niedrigeren benötigten Trennkraft im anschließenden Trennprozess und somit zu einer geringeren Oberflächenrauheit der Trennfläche 20.

In Figur 6B ist gezeigt, dass das Material 1 aus verschiedenen Schichten 1', 1", 1‴ aufgebaut sein kann. Jede Schicht weist hierbei eine eigene Materialdicke auf, wobei die Gesamtmaterialdicke L_{M} die Summe der Dicken der einzelnen Schichten ist. Insbesondere kann auch jede Schicht einen individuellen Brechungsindex aufweisen, wobei jedoch jede Schicht teilweise transparent für die Wellenlänge des Lasers ist. Auch hier ist die elongierte Modifikationszone 602 größer als die gesamte Materialdicke.

In Figur 6C ist gezeigt, dass die elongierte Modifikationszone 602 auch so in das Material 1 eingebracht werden kann, dass lediglich eine Materialoberfläche 14 von der elongierten Modifikationszone 602 durchdrungen wird. Im vorliegenden Fall wird die obere Oberfläche 14 durchdrungen. Es ist aber auch möglich, dass durch den Laserstrahl 6 andere Arten von Materialmodifikationen 3 in das Material 1 eingebracht werden.

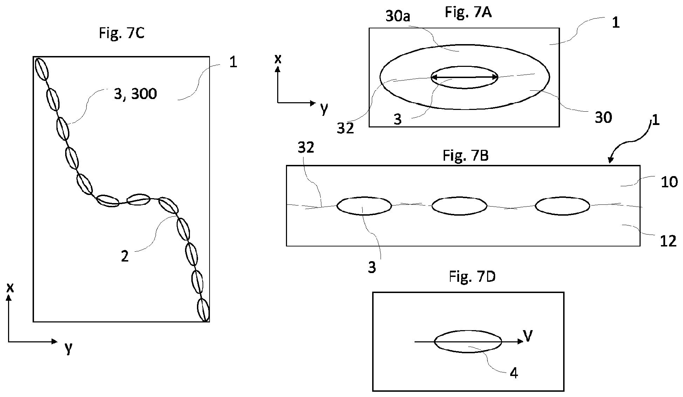

In Figur 7A ist eine elliptische Materialmodifikation 3 in einem Material 1 gezeigt. Die Materialmodifikation 3 wird durch den Laserstrahl 60 des Lasers 6 in das Material 1 eingebracht. Hierbei wird die Form der Materialmodifikation 3 durch den Strahlquerschnitt 4 des Laserstrahls 60, insbesondere durch dessen Modifikationszone 602 vorgegeben. Um den Bereich der Materialmodifikation 3 herum, in dem für die Zeit des Laserpulses eine direkte Einwirkung des Laserstrahls 60 auf das Material 1 vorliegt, kommt es zur Ausbildung eines Materialmodifikationsbereichs 30, welcher in der Form der eingebrachten Materialmodifikation 3, beziehungsweise dem Strahlquerschnitt 4 des Laserstrahls 6 entspricht.

Dementsprechend können sowohl in der Materialmodifikation 3 selbst, als auch im Materialmodifikationsbereich 30 Materialspannungen auftreten, welche eine Rissbildung begünstigen. Beispielsweise kann bei einer elliptischen Materialmodifikation 3 eine Rissbildung an den Stellen der Ellipse begünstigt werden, an denen der Kurvenradius der Begrenzungslinie besonders klein ist. Durch einen kleinen Kurvenradius wird sichergestellt, dass die Spannung, die durch die Materialmodifikation 3 in das Glas 1 eingebracht wird, in viele verschiedene Richtungen besonders schnell abfallen kann. Somit erfolgt an dieser Stelle einer Relaxation der Materialspannung mit höherer Wahrscheinlichkeit als an Orten, wo die Materialspannung nur in wenige Richtungen relaxieren kann. Dadurch sind im Material 1 die Stellen der Materialmodifikation 3 besonders instabil, die einen kleinen Kurvenradius aufweisen.

Die Bildung des Risses 32 findet dann vorzugsweise in Richtung der langen Achse der elliptischen Materialmodifikation 3 statt. Somit ist es möglich die Rissausbreitung durch die Orientierung der Materialmodifikation 3 zu steuern. So ist es insbesondere möglich die Rissausbreitung von einer Materialmodifikation 3 zu einer anderen Materialmodifikation 3 zu steuern.

In Figur 7B sind mehrere Materialmodifikationen 3 in das Material 1 eingebracht worden. Die Materialmodifikationen 3 sind abermals elliptisch. Dadurch bilden sich die Risse 32 besonders bevorzugt entlang der langen Achse der Ellipse an den Stellen der kleinsten Kurvenradien der Ellipse aus. Die Materialmodifikationen 3 sind in der Figur so nah beieinander platziert, dass die jeweiligen Risse benachbarter Materialmodifikationen überlappen. Dadurch ist es möglich, dass sich die Risse zusammenschließen und einen gemeinsamen Riss zwischen zwei benachbarten Materialmodifikationen formen. Insbesondere kann dieser Zustand durch ein Risswachstum erreicht werden, wie beispielsweise durch Aufbringen einer Zugkraft. Beispielsweise können durch dieses Verfahren Risse 32 entlang beliebiger Trennlinien 2 in das Material 1 eingebracht werden.

In Figur 7C ist gezeigt, dass die langen Achsen der Materialmodifikationen 3 und der Materialauswürfe 300 entlang der Trennlinie 2 ausgerichtet sind. Da die langen Achsen der Materialmodifikationen 3 entlang der Trennlinie 2 ausgerichtet sind, bedeutet dies gleichzeitig, dass beim Einbringen der Materialmodifikationen 3 die lange Achse des Strahlquerschnitts des Laserstrahls 60 entlang der Trennlinie 2 ausgerichtet war.

In Figur 7D ist dementsprechend gezeigt, dass die lange Achse des Strahlquerschnitts 4 parallel zur Vorschubgeschwindigkeit V ausgerichtet ist, so dass die lange Achse stets parallel zur Trennlinie 2 ausgerichtet ist.

In Figur 8A ist ein Aufbau zum Durchführen des Verfahrens gezeigt. Der Laserstrahl 60 des Ultrakurzpulslasers 6 wird durch eine Strahlformungsoptik 9 und einen optionalen Spiegel 70 auf das Material 1 gelenkt. Das Material 1 ist hierbei auf einer Auflagefläche der Vorschubvorrichtung angeordnet, wobei die Auflagefläche die Laserenergie, die das Material nicht absorbiert, bevorzugt weder reflektiert, noch absorbiert noch stark zurück in das Material 1 streut.

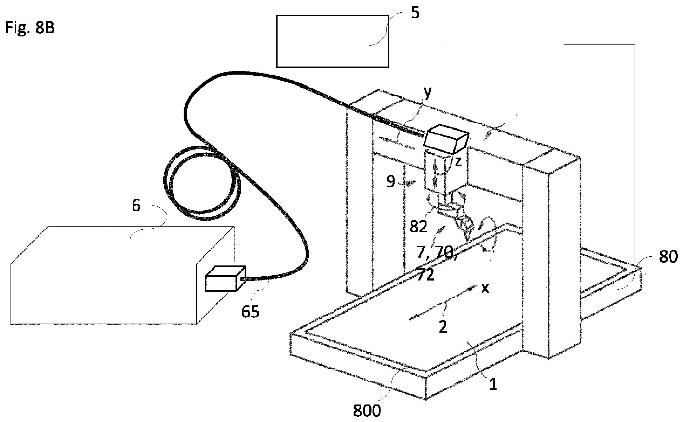

Insbesondere kann der Laserstrahl 60 durch eine Freiraumstrecke mit einem Linsen- und Spiegelsystem in die Strahlformungsoptik 9 eingekoppelt werden. Der Laser kann aber auch durch eine Hohlkernfaser 65 mit Einkoppel- und Auskoppeloptik in die Strahlformungsoptik eingekoppelt werden, wie in Figur 8B gezeigt.

Die Strahlformungsoptik 9 kann beispielsweise ein diffraktives optisches Element oder ein Axicon sein, welches aus einem Gauß-förmigen Laserstrahl 60 einen nicht-beugenden Laserstrahl 60 erzeugt. Im vorliegenden Beispiel wird der Laserstrahl 60 von dem Spiegel 70 in Richtung des Materials 1 gelenkt und von einer Fokussieroptik 72 auf oder in das Material 1 fokussiert. Im Material 1 verursacht der Laserstrahl 60 Materialmodifikationen 3. Die Strahlformungsoptik 9 kann insbesondere gedreht werden, so dass beispielsweise eine Vorzugsrichtung beziehungsweise eine Symmetrieachse des Laserstrahls an die Vorschubtrajektorie angepasst werden kann. Erfindungsgemäß wird der quasi nicht-beugende Strahl mit einem doppelbrechenden Element, beispielsweise einem Quartz Angle Displacer oder einem Quartz Beam Displacer oder einer Kombination davon erzeugt.

Die Vorschubvorrichtung 8 kann hierbei das Material 1 unter dem Laserstrahl 60 mit einem Vorschub V bewegen, so dass der Laserstrahl 60 Materialmodifikationen 3 entlang der gewünschten Trennlinie 2 einbringt. Insbesondere umfasst in der gezeigten Figur die Vorschubvorrichtung 8 einen ersten Teil 80, der das Material 1 entlang einer Achse bewegen kann. Insbesondere kann die Vorschubvorrichtung auch einen zweiten Teil 82 aufweisen, der dazu eingerichtet ist den Laserstrahl 60 um die z-Achse, beziehungsweise um die Strahlausbreitungsrichtung zu rotieren, sodass die lange Achse des Strahlquerschnitts senkrecht zur Strahlausbreitungsrichtung stets tangential zur gewünschten Trennlinie 2 steht, um so eine Rissausbreitung entlang der Trennlinie 2 zu bewirken.

Sofern die Orientierung der langen Achse des Strahlquerschnitts sowohl durch die Strahlformungsoptik 9, als auch durch den zweiten Teil 82 der Vorschubvorrichtung bestimmt werden kann, so ist es auch möglich, entweder die Orientierungsmöglichkeit der Strahlformungsoptik 9 oder des zweiten Teils 82 der Vorschubvorrichtung zu verwenden. Es können aber auch beide Möglichkeiten in Ergänzung zueinander verwendet werden.

Zu diesem Zweck kann die Vorschubvorrichtung 8 mit einer Steuervorrichtung 5 verbunden sein, wobei die Steuervorrichtung 5 die Nutzerbefehle eines Benutzers der Vorrichtung in Steuerbefehle für die Vorschubvorrichtung 8 umsetzt. Insbesondere können vordefinierte Schnittmuster in einem Speicher der Steuervorrichtung 5 gespeichert sein und durch die Steuervorrichtung 5 die Prozesse automatisch gesteuert werden.

Die Steuervorrichtung 5 kann insbesondere auch mit dem Laser 6 verbunden sein. Die Steuervorrichtung 5 kann hierbei die Laserpulsenergie der Laserpulse des Lasers 6 einstellen, oder die Ausgabe eines Laserpulses oder Laserpulszuges anfordern oder auslösen. Die Steuervorrichtung 5 kann auch mit allen genannten Komponenten verbunden sein und so die Materialbearbeitung koordinieren.

Insbesondere kann so eine positionsgesteuerte Pulsauslösung realisiert werden, wobei beispielsweise ein Achsencoder der Vorschubvorrichtung 8 ausgelesen wird und das Achsencoder-Signal von der Steuervorrichtung als Ortsangabe interpretiert werden kann. Somit ist es möglich, dass die Steuervorrichtung 5 automatisch die Abgabe eines Laserpulses oder Laserpulszuges auslöst, wenn beispielsweise eine interne Addiereinheit, die die zurückgelegte Wegstrecke addiert, einen Wert erreicht und sich nach Erreichen auf 0 zurücksetzt. So kann beispielsweise in regelmäßigen Abständen automatisch ein Laserpuls oder Laserpulszug in das Material 1 abgegeben werden.

Indem in der Steuervorrichtung 5 auch die Vorschubgeschwindigkeit und die Vorschubrichtung und somit die Trennlinie 2 verarbeitet werden, kann eine automatisierte Abgabe der Laserpulse oder Laserpulszüge erfolgen.

Die Steuervorrichtung 5 kann auch aufgrund der gemessenen Geschwindigkeit und der vom Laser 6 zur Verfügung gestellten Grundfrequenz einen Abstand dM oder Ort berechnen, an dem eine Abgabe eines Laserpulszuges oder Laserpulses erfolgen soll.

Indem die Abgabe der Laserpulse oder der Pulszüge positionsgesteuert erfolgt, entfällt eine aufwändige Programmierung des Trennprozesses. Zudem können frei wählbare Prozessgeschwindigkeiten einfach umgesetzt werden.

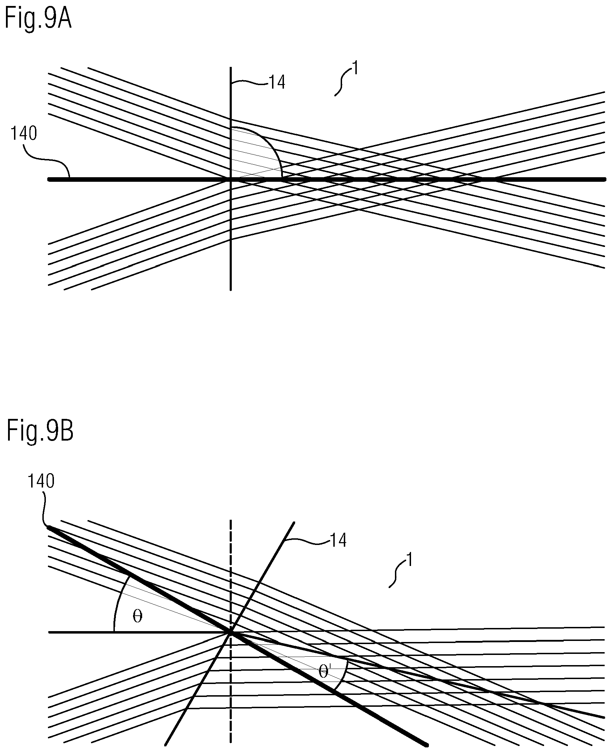

In Figur 9 ist gezeigt, wie aus den Teillaserstrahlen hinter einer Strahlformoptik 9 ein quasi-nicht-beugender Strahl in das Material 1 eingebracht wird. In Figur 9A fallen die Teillaserstrahlen symmetrisch zur Oberflächennormalen 140 des Materials 1 auf dessen Oberfläche 14. Insbesondere fällt somit der Laserstrahl insgesamt unter einem rechten Winkel auf die Oberfläche 14. Dementsprechend ist die elongierte Modifikationszone 602 parallel zur Oberflächennormalen 140 ausgerichtet, also insbesondere keine Brechung erfährt. Sehr wohl fallen aber die Teillaserstrahlen unter einem Winkel auf die Materialoberfläche 14, so dass diese gemäß des Snellius'schen Brechungsgesetzes gebrochen werden. Durch den Brechungsindex des Materials 1 und dem Einfallswinkel der Teillaserstrahlen lässt sich die Länge der elongierten Modifikationszone 602 in dem Material 1 bestimmen. Entlang der elongierten Modifikationszone 602 können in das Material 1 Materialmodifikationen 3 eingebracht werden.

In Figur 9B ist eine Situation gezeigt, bei der die Teillaserstrahlen nicht symmetrisch zur Oberflächennormalen 140 in das Material 1 eingebracht werden, sondern unter einem Winkel θ. Dadurch wird eine elongierte Modifikationszone 602 in dem Material geformt, die sich nicht parallel zur Oberflächennormalen 140 erstreckt, sondern unter einem gewissen Winkel θ' gebrochen wird. Dadurch ist es möglich, Materialmodifikationen 3 in das Material 1 einzubringen, die nicht parallel zur Oberflächennormalen 140 verlaufen. Somit kann ein Material 1 beispielsweise unter einem Winkel θ' getrennt werden.

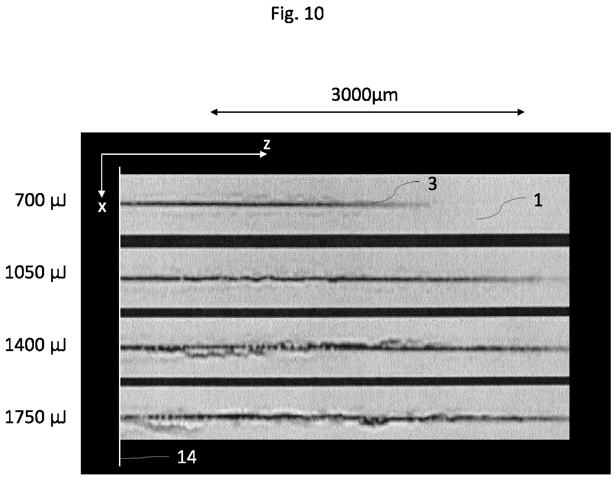

In Figur 10 sind Mikroskopaufnahmen der Materialmodifikationen 3 gezeigt, die für verschiedene Pulsenergien in das Material 1 eingebracht wurden. Hierfür durchdrang die elongierte Modifikationszone 602 die Oberfläche 14 des Materials 1. Dementsprechend beginnen die gezeigten Materialmodifikationen 3 jeweils an der Oberfläche 14. Bei einer Pulsenergie von 700 µJ wurde eine erste elongierte Modifikationszone 602 erzeugt, die kürzer als die Materialdicke L_{M} war. Dementsprechend endet die Materialmodifikation, bevor sie die untere Oberfläche erreicht. Zur Vergrößerung der elongierten Modifikationszonen 602 wurde die Pulsenergie erhöht, wie oben insbesondere in Figur 3F gezeigt. Beispielsweise wurde bei einer Pulsenergie von 1400 µJ eine doppelt so lange elongierte Modifikationszone 602 erzeugt, wie bei 700µJ. Grundsätzlich muss aber kein linearer Zusammenhang zwischen der Länge der elongierten Modifikationszone und der Pulsenergie vorhanden sein. Es ist aber möglich, dass der Zusammenhang zwischen Länge der elongierten Modifikationszone und Pulsenergie abschnittsweise durch einen linearen Zusammenhang angenähert werden kann.. Dementsprechend war die erzeugte elongierte Modifikationszone 602 größer als 1,5×L_{M}, so dass eine Materialmodifikation 3 in dem Material 1 erzeugt wurde, die sich zwischen den beiden gegenüberliegenden Materialoberflächen erstreckt. Soweit anwendbar, können alle einzelnen Merkmale, die in den Ausführungsbeispielen dargestellt sind, miteinander kombiniert und/oder ausgetauscht werden, ohne den Bereich der Erfindung zu verlassen, die in den Ansprüchen definiert ist.

### Bezugszeichenliste

- 1: Material
- 10: erste Materialhälfte
- 12: zweite Materialhälfte
- 14: Oberfläche
- 140: Oberflächennormale
- 2: Trennlinie
- 20: Trennfläche
- 3: Materialmodifikation
- 30: Materialmodifikationsbereich
- 300: Materialauswurf
- 32: Riss
- 4: Strahlquerschnitt
- 41: Hauptordnung
- 43: Nebenordnung
- 5: Steuervorrichtung
- 6: Laser
- 60: Laserstrahl
- 600: Fokuszone
- 602: Modifikationszone
- 62: Dauerstrich-CO2-Laser
- 620: Temperaturgradient
- 65: Hohlkernfaser
- 7: Fokussiereinheit
- 70: Spiegel
- 72: Fokussieroptiken
- 8: Vorschubvorrichtung
- 80: erster Teil der Vorschubvorrichtung
- 800: Auflagefläche
- 82: zweiter Teil der Vorschubvorrichtung
- 9: Strahlformungsoptik
- 11: chemisches Bad
- 110: Reaktionsblasen
- L_{M}: Dicke des Materials
- dA: Außendurchmesser des Materialauswurfs
- dM: Abstand der Materialmodifikationen
- FZ: Zugkraft

## Patentansprüche

1. Verfahren zum Trennen eines zumindest teilweise transparenten Materials (1), wobei ultrakurze Laserpulse in Form von Einzellaserpulsen und/oder in Form von Pulszügen, welche mehrere Sub-Laserpulse umfassen, so in das Material (1) fokussiert werden, dass die resultierende und in Strahlausbreitungsrichtung elongierte Modifikationszone (602) in das Material (1) eintritt und mindestens eine Oberfläche (14) des Materials durchdringt, wobei dadurch Materialmodifikationen (3) in das Material (1) eingetragen werden,
wobei eine Mehrzahl von Materialmodifikationen (3) entlang einer Trennlinie (2) in das Material (1) eingetragen werden,
wobei die Pulsenergie der Einzellaserpulse oder die Summe der Pulsenergien der Sub-Laserpulse in einem Bereich von 500µJ bis 50mJ liegt, wobei die elongierte Modifikationszone (602) in Strahlausbreitungsrichtung länger als die Materialdicke L_{M} ist und länger als 1,5×L_{M} oder länger als 2×(200µm)+ L_{M} ist
und wobei das Material (1) anschließend mittels eines Trennschritts entlang der Trennlinie (2) getrennt wird,
**dadurch gekennzeichnet, dass**
der durch die Laserpulse ausgebildete Laserstrahl (60) so in das Material fokussiert wird, dass der Laserstrahl (60) eine elongierte Fokuszone aufweist, wobei der Laserstrahl (60) zumindest in der elongierten Fokuszone (600) ein quasi nicht-beugender Strahl ist, der Laserstrahl (60) einen nicht-radialsymmetrischen Strahlquerschnitt (4) senkrecht zur Strahlausbreitungsrichtung aufweist, wobei der Strahlquerschnitt (4) beziehungsweise die Einhüllende des Strahlquerschnitts (4) elliptisch geformt ist, und dass die lange Achse des elliptischen, quasi nicht-beugenden Strahls einen nicht-verschwindenden Interferenzkontrast von weniger als 0,9 aufweist, wobei der quasi nicht-beugende Strahl mit einem doppelbrechenden Element, insbesondere einem Quartz Angle Displacer oder einem Quartz Beam Displacer oder einer Kombination davon, erzeugt wird.

2. Verfahren nach Anspruch 1, **dadurch gekennzeichnet, dass** der Trennschritt das Aufbringen einer thermischen Spannung entlang der Trennlinie (2) und/oder das Aufbringen einer mechanischen Spannung, bevorzugt einer Zug- oder Biegespannung und/oder das Ätzen mittels mindestens einer nasschemischen Lösung, umfasst.

3. Verfahren nach Anspruch 1 oder 2, **dadurch gekennzeichnet, dass** das Material (1) ein Glassubstrat und/oder ein gestapeltes Substratsystem und/oder ein Siliziumwafer ist, wobei die Dicke des Materials (L_{M}) bevorzugt größer als 1mm ist.

4. Verfahren nach einem der vorherigen Ansprüche, **dadurch gekennzeichnet, dass**
- die Laserpulse eine Wellenlänge zwischen 0,3µm und 1,5µm aufweisen, und/oder
- die Pulslänge der Einzellaserpulse und/oder der Sub-Laserpulse 0,01ps bis 50ps beträgt, bevorzug 0,3-15ps beträgt, und/oder
- die mittlere Leistung des Lasers am Laserausgang zwischen 150W und 15kW beträgt.

5. Verfahren nach einem der vorherigen Ansprüche, **dadurch gekennzeichnet, dass** der durch die Laserpulse ausgebildete Laserstrahl (60) und das Material (1) relativ zueinander mit einem Vorschub (V) verschiebbar sind, um die Mehrzahl der Materialmodifikationen (3) entlang der Trennlinie (2) in das Material (1) einzutragen, wobei der Laserstrahl (60) und das Material (1) bevorzugt unter einem Winkel (θ) zueinander ausrichtbar, besonders bevorzugt verkippbar und/oder rotierbar, sind.

6. Verfahren nach einem der vorherigen Ansprüche, **dadurch gekennzeichnet, dass** der maximale Durchmesser des Strahlquerschnitts (4) senkrecht zur Strahlausbreitungsrichtung in der Modifikationszone (602) zwischen 1µm und 50µm liegt, bevorzugt zwischen 2µm und 4µm liegt.

7. Verfahren nach einem der vorherigen Ansprüche, **dadurch gekennzeichnet, dass** die lange Achse des nicht-radialsymmetrischen Strahlquerschnitts (4) senkrecht zur Strahlausbreitungsrichtung entlang der Trennlinie (2) und/oder entlang der Vorschubrichtung orientiert ist.

8. Verfahren nach einem der vorherigen Ansprüche, **dadurch gekennzeichnet, dass** der durch die Laserpulse ausgebildete Laserstrahl (60) unter einem Bearbeitungswinkel (θ) auf die Materialoberfläche (14) trifft, der bevorzugt kein rechter Winkel ist, wobei der Bearbeitungswinkel (θ) für Materialdicken (L_{M}) kleiner als 2mm kleiner als 20° ist und für Materialdicken (L_{M}) größer als 2mm kleiner als 10°, bevorzugt kleiner als 5°, ist.

9. Verfahren nach einem der vorherigen Ansprüche, **dadurch gekennzeichnet, dass** die Einzellaserpulse und/oder Pulszüge durch eine positionsgesteuerte Pulsauslösung vom Lasersystem (6) ausgelöst werden, wobei die Position bevorzugt durch die Position des durch die Laserpulse ausgebildeten Laserstrahls (60) auf dem Material (1) gegeben ist.

## Claims

1. A method for severing an at least partially transparent material (1), wherein ultrashort laser pulses, in the form of individual laser pulses and/or in the form of pulse trains comprising a plurality of sub-laser pulses, are focused into the material (1) such that the resulting modification zone (602), which is also elongated in a beam propagation direction, enters the material (1) and penetrates at least one surface (14) of the material, wherein material modifications (3) are introduced into the material (1) as a result,
wherein a plurality of material modifications (3) along a severing line (2) are introduced into the material (1),
wherein the pulse energy of the individual laser pulses, or the total of the pulse energies of the sub-laser pulses lie in a range of 500 µJ to 50 mJ, wherein the elongated modification zone (602) in the beam propagation direction is longer than the material thickness L_{M} and is longer than 1.5×L_{M} or longer than 2×(200µm)+ L_{M}, and wherein the material (1) is then severed along the severing line (2) by means of a severing cut,
**characterized in that**
the laser beam (60) formed by the laser pulses is focused into the material such that the laser beam (60) has an elongated focusing zone, wherein the laser beam (60) is a quasi-non-diffracting beam, at least in the elongated focus zone (600), the laser beam (60) has a non-radially-symmetric beam cross section (4) perpendicular to the beam propagation direction, wherein the beam cross-section (4), or the envelope end of the beam cross-section (4), has an elliptical shape,
and that the long axis of the elliptical, quasi-non-diffracting beam has a non-negligible interference contrast of less than 0.9, wherein the quasi-non-diffracting beam is generated using a birefringent element, in particular a quartz angle displacer or a quartz beam displacer, or a combination thereof.

2. The method according to claim 1, **characterized in that** the severing cut comprises applying a thermal stress along the severing line (2) and/or applying a mechanical stress, preferably a tension or bending stress, and/or performing etching by means of at least one wet-chemical solution.

3. The method according to claim 1 or 2, **characterized in that** the material (1) is a glass substrate and/or a stacked substrate system and/or a silicon wafer, wherein the thickness of the material (L_{M}) is preferably greater than 1mm.

4. The method according to any one of the preceding claims, **characterized in that**
- the laser pulses have a wavelength between 0.3 µm and 1.5 µm, and/or
- the pulse length of the individual laser pulses and/or of the sub-laser pulses is 0.01 ps to 50 ps, preferably 0.3 - 15 ps, and/or
- the average power of the laser at the laser output is between 150 W and 15 kW.

5. The method according to any one of the preceding claims, **characterized in that** the laser beam (60) formed by the laser pulses and the material (1) are displaceable relative to one another, with a forward feed (V) provided in order to introduce the plurality of the material modifications (3) into the material (1) along the severing line (2), wherein the laser beam (60) and the material (1) are alignable, particularly preferably tiltable and or rotatable, with respect to one another, preferably at an angle (θ).

6. The method according to any one of the preceding claims, **characterized in that** the maximum diameter of the beam cross-section (4) perpendicular to the beam propagation direction in the modification zone (602) lies between 1 µm and 50 µm, preferably between 2 µm and 4 µm.

7. The method according to any one of the preceding claims, **characterized in that** the long axis of the non-radially symmetric beam cross-section (4) is oriented perpendicular to the beam propagation direction along the severing line (2) and/or along the forward feed direction.

8. The method according to any one of the preceding claims, **characterized in that** the laser beam (60) formed by the laser pulses is incident at a processing angle (θ) on the material surface (14), the angle preferably not being a right angle, wherein the processing angle (θ) for material thicknesses (L_{M}) less than 2 mm is less than 20° and for material thicknesses (L_{M}) greater than 2 mm is less than 10°, preferably less than 5°.

9. The method according to any one of the preceding claims, **characterized in that** the individual laser pulses and/or the pulse trains are triggered by a position-controlled pulse triggering by the laser system (6), wherein the position is preferably based on the position on the material (1) of the laser beam (60) formed by the laser pulses.

## Revendications

1. Procédé de séparation d'un matériau (1) au moins partiellement transparent, dans lequel des impulsions laser ultracourtes, sous forme d'impulsions laser individuelles et/ou sous forme de trains d'impulsions comportant plusieurs sous-impulsions laser, sont focalisées dans le matériau (1) de sorte que la zone de modification (602) résultante, allongée dans la direction de propagation du faisceau, pénètre dans le matériau (1) et traverse au moins une surface (14) du matériau, dans lequel des modifications de matériau (3) sont ainsi apportées dans le matériau (1),
dans lequel une pluralité de modifications de matériau (3) sont apportées dans le matériau (1) le long d'une ligne de séparation (2),
dans lequel l'énergie d'impulsion des impulsions laser individuelles ou la somme des énergies d'impulsion des sous-impulsions laser est comprise dans une plage de 500 µJ à 50 mJ, dans lequel la longueur de la zone de modification (602) allongée dans la direction de propagation du faisceau est supérieure à l'épaisseur du matériau L_{M} et est supérieure à 1,5 × L_{M} ou supérieure à 2 × (200 µm) + L_{M},
et dans lequel le matériau (1) est ensuite séparé le long de la ligne de séparation (2) lors d'une étape de séparation,
**caractérisé en ce que**
le faisceau laser (60) formé par les impulsions laser est focalisé dans le matériau de telle sorte que le faisceau laser (60) présente une zone de focalisation allongée, dans lequel le faisceau laser (60) est un faisceau quasi non diffractif au moins dans la zone de focalisation (600) allongée, **en ce que** le faisceau laser (60) présente une section transversale du faisceau (4) non radialement symétrique perpendiculaire à la direction de propagation du faisceau, dans lequel la section transversale du faisceau (4), ou plus spécifiquement l'enveloppe de la section transversale du faisceau (4), présente une forme elliptique,
et **en ce que** le grand axe du faisceau quasi non diffractif elliptique présente un contraste d'interférence non infime inférieur à 0,9, dans lequel le faisceau quasi non diffractif est généré à l'aide d'un élément biréfringent, en particulier à l'aide d'un déplaceur d'angle en quartz ou d'un déplaceur de faisceau en quartz, ou encore d'une combinaison de ceux-ci.

2. Procédé selon la revendication 1, **caractérisé en ce que** l'étape de séparation comprend l'application d'une contrainte thermique le long de la ligne de séparation (2) et/ou l'application d'une contrainte mécanique, de préférence d'une contrainte de traction ou de flexion et/ou d'une gravure à l'aide d'au moins une solution chimique humide.

3. Procédé selon la revendication 1 ou 2, **caractérisé en ce que** le matériau (1) est un substrat en verre, un système de substrats empilés et/ou une plaquette de silicium, dans lequel l'épaisseur du matériau (L_{M}) est de préférence supérieure à 1 mm.

4. Procédé selon l'une quelconque des revendications précédentes, **caractérisé en ce que**
- les impulsions laser ont une longueur d'onde comprise entre 0,3 µm et 1,5 µm, et/ou
- la durée d'impulsion des impulsions laser individuelles et/ou des sous-impulsions laser est de 0,01 ps à 50 ps, et de préférence de 0,3 ps à 15 ps, et/ou
- la puissance moyenne de sortie du laser est comprise entre 150 W et 15 kW.

5. Procédé selon l'une quelconque des revendications précédentes, **caractérisé en ce que** le faisceau laser (60) formé par les impulsions laser et le matériau (1) sont déplaçables l'un par rapport à l'autre avec une vitesse d'avance (V) afin d'apporter la pluralité de modifications de matériau (3) dans le matériau (1) le long de la ligne de séparation (2), dans lequel le faisceau laser (60) et le matériau (1) sont de préférence alignés selon un angle (θ) l'un par rapport à l'autre, et de préférence encore inclinables et/ou rotatifs.

6. Procédé selon l'une quelconque des revendications précédentes, **caractérisé en ce que** le diamètre maximal de la section transversale du faisceau (4) perpendiculaire à la direction de propagation du faisceau dans la zone de modification (602) est compris entre 1 µm et 50 µm, de préférence entre 2 µm et 4 µm.

7. Procédé selon l'une quelconque des revendications précédentes, **caractérisé en ce que** le grand axe de la section transversale du faisceau (4) non radialement symétrique est orienté perpendiculairement à la direction de propagation du faisceau le long de la ligne de séparation (2) et/ou le long de la direction d'avance.

8. Procédé selon l'une quelconque des revendications précédentes, **caractérisé en ce que** le faisceau laser (60) formé par les impulsions laser frappe la surface du matériau (14) selon un angle de traitement (θ) qui n'est de préférence pas un angle droit, dans lequel l'angle de traitement (θ) est inférieur à 20° pour les épaisseurs de matériau (L_{M}) inférieures à 2 mm, et inférieur à 10°, de préférence inférieur à 5°, pour les épaisseurs de matériau (L_{M}) supérieures à 2 mm.

9. Procédé selon l'une quelconque des revendications précédentes, **caractérisé en ce que** les impulsions laser individuelles et/ou les trains d'impulsions sont déclenchés par le système laser (6) via un déclenchement d'impulsions contrôlé par la position, dans lequel la position est de préférence donnée par la position du faisceau laser (60) formé par les impulsions laser sur le matériau (1).
